# EUROPÄISCHE PATENTSCHRIFT

(11) **EP 4 492 833 B1**
(45) Veröffentlichungstag und Bekanntmachung des Hinweises auf die Patenterteilung: **20.05.2026**
(21) Anmeldenummer: 24182739.3
(22) Anmeldetag: 18.06.2024
(51) Int. Cl.: H04W 4/40, H04L 67/12, H04W 4/80

(54) **KOMMUNIKATIONSSYSTEM UND -VERFAHREN**
COMMUNICATION SYSTEM AND METHOD
SYSTÈME ET PROCÉDÉ DE COMMUNICATION

(30) Priorität: 11.07.2023 DE 102023118308
(43) Veröffentlichungstag der Anmeldung: 15.01.2025
(73) Patentinhaber: Liebherr-Mischtechnik GmbH, 88427 Bad Schussenried (DE)
(72) Erfinder: PREGIZER, Florian, 89143 Blaubeuren-Asch (DE)
(74) Vertreter: Lorenz Seidler Gossel Part. mbB

(56) Entgegenhaltungen:
- US-A1- 2017 323 562
- US-A1- 2020 252 768

## Beschreibung

Die vorliegende Erfindung betrifft ein Kommunikationssystem für Arbeitsstätten, insbesondere für Großbaustellen und Minen, die keine feste Kommunikationsinfrastruktur besitzen, sowie ein entsprechendes Verfahren und Computerprogrammprodukt.

In großen Arbeitsstätten wie beispielsweise Großbaustellen und Minen erzeugen die dort tätigen Baumaschinen und Minenfahrzeuge, aber auch zusätzliche Komponenten wie beispielsweise unabhängige Sensoren, eine Vielzahl von Daten, die für verschiedene Akteure relevant sind. Diese Daten können zu transportierendes und/oder herzustellendes und/oder zu verarbeitendes Material, zu bearbeitende Objekte bzw. Gebäude, Maschinendaten, administrative Daten, Bewegungs- und Positionsdaten und weitere Informationen umfassen und sind für den Betrieb anderer Arbeitsmaschinen oder Nutzfahrzeugen relevant, um die Arbeitsprozesse auf der Arbeitsstätte optimal abstimmen und steuern zu können. Andererseits können menschliche Akteure einen Bedarf an diesen Daten haben, beispielsweise Disponenten, Servicepersonal, Bediener oder Vorarbeiter.

Damit sämtliche Akteure auf diese Daten zugreifen können, ist zum einen ein entsprechender Transport der Daten, d.h. eine effektive Datenverteilung über die Arbeitsstätte, sowie eine entsprechende Zugriffsmöglichkeit notwendig. Hierfür wird häufig ein bestehendes Mobilfunknetz oder eine Internetverbindung genutzt, um die Daten einem zentralen System zu übergeben, über das dann auch ein zentraler Zugriff realisiert werden kann.

In manchen Fällen existiert jedoch keine derartige externe Kommunikationsinfrastruktur. Insbesondere in ländlichen, abgeschiedenen Gegenden stehen entweder keine oder nur eingeschränkte Mobilfunkdienste für jedes Gerät zur Verfügung. Oft ist nur eine zentrale Stelle an das Internet angebunden, z.B. über Sattelitendienste. Zusätzlich besitzen Großbaustellen oder Minen eine hohe Dynamik. Ein Teil der Arbeitsmaschinen und Geräte verweilt statisch an einem Ort, während andere Geräte und Nutzfahrzeuge ebenso wie menschliches Personal mobil sind. Diese stationären und mobilen Akteure können im Hinblick auf die Datenerzeugung und -verbreitung auch als "Knoten" bzw. "Netzwerkknoten" bezeichnet werden. In Kombination mit den großen Ausdehnungen derartiger Arbeitsstätten und den begrenzten Sende- und Empfangsreichweiten drahtloser Kommunikationseinrichtungen ist oftmals keine direkte Kommunikation mit einer zentralen Stelle möglich und selbst mit einer Multi-Hop-Kommunikationsstrategie ist durch die Mobilität der Knoten keine durchgängige Vernetzung garantiert. Das Kommunikationsnetzwerk zerfällt daher in nicht miteinander verbundene Partitionen.

Insbesondere auf Großbaustellen, Minen oder auf Baustellen in entlegenen Gebieten steht also nicht immer eine externe Kommunikationsmöglichkeit zur Verfügung. Somit können die benötigten Daten den Maschinen bzw. den Personen, die an diesen Daten interessiert sind, nicht ohne Weiteres bereitgestellt werden.

Ein Beispiel für eine solche Arbeitsstätte ist eine Großbaustelle mit eigener Betonverarbeitung oder -herstellung sowie dessen Verteilung durch fahrbare Betonmischer (sog. Fahrmischer). Bei der Herstellung, dem Transport und der Verarbeitung von Beton entsteht eine Vielzahl an Daten, die an anderer örtlicher und zeitlicher Stelle wieder zur Verfügung gestellt werden müssen. Diese werden beispielsweise zu Dokumentationszwecken benötigt, um z.B. eine ausreichende Betonqualität an einem bestimmten Einbringort zu einer bestimmten Zeit zu belegen. Ebenso sind für die Materialdisposition z.B. verarbeitete Mengen und Materialbedarfe erforderlich. Für die Optimierung und korrekte Erfassung der Materialmengen besteht ein Bedarf an weiteren Angaben wie z.B. Viskosität, Betonrezeptur und/oder Wassergehalt.

Das Dokument US 2020/252768 A1 offenbart ein Kommunikationssystem für Arbeitsstätten ohne feste Kommunikationsinfrastruktur.

Vor diesem Hintergrund liegt der vorliegenden Erfindung die Aufgabe zugrunde, einen Datenaustausch zwischen den beteiligten Akteuren auf einer solchen Arbeitsstätte, welche keine externe Kommunikationsinfrastruktur besitzt, sowie einen entsprechenden zentralen Zugriff auf diese Daten zu ermöglichen.

Erfindungsgemäß wird diese Aufgabe durch ein Kommunikationssystem mit den Merkmalen des Anspruchs 1 gelöst. Vorteilhafte Ausführungsformen der Erfindung ergeben sich aus den Unteransprüchen und der nachfolgenden Beschreibung.

Demnach wird ein Kommunikationssystem für Arbeitsstätten, insbesondere für Großbaustellen und Minen, die keine feste Kommunikationsinfrastruktur besitzen, vorgeschlagen, welches eine Vielzahl von mobilen Kommunikationsmodulen, eine Vielzahl von stationären Kommunikationsmodulen, mindestens eine Erfassungseinheit sowie eine Datenverwaltungsstation umfasst. Unter einer Vielzahl sind vorliegend mindestens zwei zu verstehen.

Die mobilen Kommunikationsmodule werden vorliegend deshalb als "mobil" bezeichnet, weil sie jeweils einem mobilen Gerät (z.B. einem Laptop, Tablet, Smartphone, tragbaren Werkzeug oder dergleichen) oder einem beweglichen Nutzfahrzeug (z.B. einem Truck, Kipper, Bagger, Mobilkran, Fahrmischer, einer mobilen Betonpumpe, Tiefbaumaschine, Walze, Gabelstapler, Reinigungsmaschine etc.) zugeordnet, d.h. an bzw. in diesen vorgesehen sind. Diese mobilen Geräte und/oder Nutzfahrzeuge mitsamt den daran bzw. darin angeordneten mobilen Kommunikationsmodulen sind nicht (zumindest nicht immer bzw. nicht ausschließlich) statisch, sondern können sich innerhalb der Arbeitsstätte bewegen. Im Folgenden werden diese mobilen Teilnehmer samt deren Kommunikationsmodulen auch als "mobile Knoten" bezeichnet.

Die stationären Kommunikationsmodule sind jeweils einem festen Ort auf der Arbeitsstätte, insbesondere einer stationären Arbeitsmaschine wie beispielsweise einem Betonmischwerk, einer stationären Transport- und/oder Verteileranlage oder einem Kran zugeordnet. Im Folgenden werden diese statischen Teilnehmer samt deren stationären Kommunikationsmodulen auch als "stationäre Knoten" bezeichnet. Ebenfalls kann vorgesehen sein, dass ein oder mehrere stationäre Kommunikationsmodule unabhängig von einer Arbeitsmaschine an einem bestimmten Ort platziert sind, und somit nur die Funktion eines stationären Knotens übernehmen (beispielsweise ein an einem Mast angeordnetes stationäres Kommunikationsmodul).

Mittels der mindestens einen Erfassungseinheit ist mindestens ein Arbeitsparameter messbar, der einen durch eine stationäre Arbeitsmaschine, ein mobiles Gerät und/oder ein Nutzfahrzeug ausgeführten Arbeitsprozess betrifft. Hierbei kann es sich um einen beliebigen Arbeitsprozessparameter wie beispielsweise eine Betonzusammensetzung, eine Betonqualität, eine Last, einen Zustand eines zu errichtenden Gebäudes, einen Füll- oder Ladezustand oder eine Position eines Nutzfahrzeugs handeln. Die mindestens eine Erfassungseinheit dient als Datenquelle für die zu verteilenden Daten, welche den oder die entsprechenden Arbeitsparameter umfassen. Die Erfassungseinheit kann insbesondere auch als Sensoranordnung bezeichnet werden und umfasst mindestens einen Sensor.

Die Erfassungseinheit steht mit einem stationären oder einem mobilen Kommunikationsmodul in Signalverbindung und kann somit an bzw. in einer stationären Arbeitsmaschine oder in bzw. an einem mobilen Gerät oder einem Nutzfahrzeug vorgesehen sein, um dort die entsprechenden Daten aufzunehmen und anderen Knoten zur Verfügung zu stellen. Durch die Verbindung mit einem Kommunikationsmodul können die erfassten Daten entsprechend bereitgestellt bzw. gesendet werden. Die Erfassungseinheit samt Kommunikationsmodul kann daher auch als "Sensorknoten" bezeichnet werden.

Die Datenverwaltungsstation umfasst ebenfalls ein stationäres Kommunikationsmodul und steht mit einem zentralen Datenspeicher in Signalverbindung. Die Datenverwaltungsstation ist dabei eingerichtet, von einem mobilen Kommunikationsmodul empfangene Daten im zentralen Datenspeicher abzulegen. Der zentrale Datenspeicher erlaubt insbesondere einen Zugriff auf die über das Kommunikationssystem auf den zentralen Datenspeicher übertragenen Daten, also insbesondere die von der mindestens einen Erfassungseinheit erfassten und bereitgestellten Daten sowie ggf. weitere Daten. Im zentralen Datenspeicher werden die Daten insbesondere aufgearbeitet, gemäß festgelegter Kriterien abgelegt bzw. archiviert und den Akteuren zur Verfügung gestellt.

Der zentrale Datenspeicher kann physisch in der Datenverwaltungsstation vor Ort oder an einem entfernten Ort vorgesehen und/oder eine Cloud sein. Die Signalverbindung zwischen dem Kommunikationsmodul der Datenverwaltungsstation und dem zentralen Datenspeicher kann permanent oder aber in festgelegten Intervallen und/oder auf Anforderung bestehen bzw. hergestellt werden.

Die Kommunikationsmodule umfassen jeweils eine Sendeeinheit, welche eingerichtet ist, innerhalb eines Sendebereichs Daten drahtlos zu senden. Dabei können unterschiedliche Kommunikationsmodule unterschiedliche Sendebereiche oder aber alle Kommunikationsmodule denselben Sendebereich besitzen. Der Sendebereich ist insbesondere ein räumlicher Bereich um die Sendeeinheit, innerhalb dem Signale drahtlos noch mit einer bestimmten minimalen Signalstärke und/oder mit bestimmten Eigenschaften gesendet werden können. Der Sendebereich hängt insbesondere von den Eigenschaften der Sendeeinheit ab.

Die Kommunikationsmodule umfassen ferner jeweils eine Empfangseinheit, welche eingerichtet ist, innerhalb eines Empfangsbereichs Daten drahtlos zu empfangen. Der Empfangsbereich eines Kommunikationsmoduls kann dem Sendebereich entsprechen oder sich von diesem unterscheiden (d.h. größer oder kleiner sein). Dabei können unterschiedliche Kommunikationsmodule unterschiedliche Empfangsbereiche oder aber alle Kommunikationsmodule denselben Empfangsbereich besitzen.

Der Empfangsbereich ist insbesondere ein räumlicher Bereich um die Empfangseinheit, innerhalb dem von einem Sender ausgesandte Signale mit bestimmten Eigenschaften noch empfangen werden können. Der Empfangsbereich hängt insbesondere sowohl von den Eigenschaften der Empfangseinheit als auch von den Eigenschaften des Senders ab.

Die Kommunikationsmodule umfassen ferner jeweils einen lokalen Datenspeicher, in welchem empfangene Daten gemäß einer festgelegten Systematik bzw. gemäß festgelegter Kriterien ablegbar sind. Der lokale Datenspeicher eines Kommunikationsmoduls kann volatil oder permanent (d.h. nicht-flüchtig bzw. nicht-volatil) sein. Bevorzugt besitzen die Kommunikationsmodule permanente Datenspeicher, auf denen empfangene Daten für eine beliebig lange Zeit gespeichert bzw. zwischengespeichert werden können. Dies ermöglicht es, die mobilen Geräte bzw. Nutzfahrzeuge, die die mobilen Kommunikationsmodule aufweisen, als Daten-Kuriere (sog. "data mules") einzusetzen, welche ihrer vorgesehenen arbeitsbezogenen Tätigkeit in der Arbeitsstätte nachgehen, ohne sich primär um die Verteilung der Daten zu kümmern. Die Datenübertragung zwischen den mobilen und stationären Knoten erfolgten insbesondere, wenn sich die Sende- bzw. Empfangsbereiche der jeweiligen Kommunikationsmodule überlappen, d.h. nicht deterministisch (im Gegensatz beispielsweise zu automatisierten Robotern, die sich auf vorgegebenen Trajektorien zwischen zwei Positionen bewegen). Da die Zeiträume zwischen den Datenübertragungen somit nicht vorherbestimmt und ggf. vergleichsweise lang sind, werden permanente lokale Datenspeicher bevorzugt, um die zwischengespeicherten Daten beliebig lange speichern zu können.

Der lokale Datenspeicher des Kommunikationsmoduls der Datenverwaltungsstation kann ein volatiler Speicher (z.B. RAM) sein, welche beispielsweise aus dem zentralen Datenspeicher abgerufenen Daten vor der Übertragung über die Sendeeinheit des Kommunikationsmoduls lediglich temporär speichert. Alternativ kann auch das Kommunikationsmodul der Datenverwaltungsstation einen permanenten lokalen Datenspeicher besitzen.

Die Kombinationsmodule des erfindungsgemäßen Kommunikationssystems sind eingerichtet, indirekt Daten zwischen stationären Kommunikationsmodulen auszutauschen, die räumlich so weit auseinander liegen, dass deren begrenzte Sende- und/oder Empfangsbereiche einander nicht überdecken bzw. überlappen. Eine direkte drahtlose Datenübertragung zwischen diesen stationären Kommunikationsmodulen ist somit nicht möglich. Die indirekte Datenübertragung erfolgt über eine Zwischenspeicherung auf den lokalen Datenspeichern der sich zwischen den Sende- und/oder Empfangsbereichen der stationären Knoten bewegenden mobilen Kommunikationsmodule. Letztere fungieren daher, wie bereits erwähnt, als Daten-Kuriere.

Die Kombinationsmodule sind ferner eingerichtet, auf dem eigenen lokalen Datenspeicher hinterlegte Daten mit empfangenen Daten abzugleichen und zu synchronisieren. Hierfür sind Kriterien festgelegt, anhand denen eine Synchronisation erfolgt oder nicht erfolgt, der eigene lokale Datenspeicher teilweise bereinigt und/oder ein Datensatz im lokalen Datenspeicher abgelegt wird. Ziel der Synchronisation ist es insbesondere, dass alle Knoten des Netzwerks des erfindungsgemäßen Kommunikationssystems einen möglichst vollständigen und aktuellen Satz aller Daten auf ihren lokalen Datenspeichern aufweisen und letztendlich alle neu erzeugten Daten ihren Weg auf den zentralen Datenspeicher finden, welcher wiederum einen zentralen Zugriff auf die Daten ermöglicht.

Die Synchronisation sorgt dafür, dass beispielsweise ein erstes Nutzfahrzeug mit einem mobilen Kommunikationsmodul Daten von einen Sensorknoten erhält, auf seinem lokalen Datenspeicher zwischenspeichert, im Rahmen seiner Arbeitstätigkeit in den Empfangsbereich eines anderen stationären Knotens eindringt, die zwischengespeicherten Daten an das stationäre Kommunikationsmodul des stationären Knotens überträgt, wo diese Daten dann im dortigen lokalen Datenspeicher abgelegt werden. Von dort aus können diese Daten (oder ein Teil davon - das hängt davon ab, welche Daten bereits auf dem anderen lokalen Datenspeicher vorhanden sind) zu einem späteren Zeitpunkt über ein weiteres Nutzfahrzeug mit einem mobilen Kommunikationsmodul an einen weiteren stationären Knoten oder an die Datenverwaltungsstation übertragen werden.

Ebenfalls können mobile Kommunikationsmodule Daten untereinander austauschen, beispielsweise wenn zwei Nutzfahrzeuge mit mobilen Kommunikationsmodulen sich weit genug einander annähern, dass deren Sende- und Empfangsbereiche einander überlappen und die Daten übertragen bzw. die lokalen Datenspeicher synchronisiert werden können. Auf diese Weise können generierte Daten mit der Zeit im gesamten Netzwerk verteilt werden und stehen irgendwann allen Geräten und Bedienern zur Verfügung.

Das Senden der Daten kann auf einer Broadcast-Übertragung basieren, was den sich stetig verändernden Bedingungen und den nicht vorhersagbaren Zeiträumen zwischen den einzelnen Datenübertragungen optimal Rechnung trägt. In diesem Fall werden bestimmte Daten permanent oder in festgelegten Intervallen ohne konkretes Empfängerziel ausgesendet, sodass sie von allen in der Nähe (bzw. den jeweiligen Sende- und Empfangsbereichen) befindlichen Teilnehmern empfangen werden können. Durch eine solche Broadcast-Übertragung kann insbesondere die inhärente Broadcast-Natur von Funksignalen ausgenutzt und die Geschwindigkeit, mit der Informationen im Netzwerk verteilt werden, erhöht werden. Zudem kann dadurch die Anzahl der Duplikate der von Knoten zu Knoten übertragenen Datenpunkte reduziert werden. Die Broadcast-Übertragung kann nur zu bestimmten Zeiten oder immer erfolgen. Ferner können nur bestimmte Knoten (beispielsweise nur die stationären oder nur die mobilen Kommunikationsmodule) die Broadcast-Übertragung nutzen oder aber alle Knoten. Zur Übertragung kann ein verbindungsloses Broadcast-Protokoll verwendet werden.

Eine Grundidee der vorliegenden Erfindung ist es also, die Mobilität der Nutzfahrzeuge und mobilen Geräte (sowie, falls vorhanden, des menschlichen Personals) auf der Arbeitsstätte zu nutzen, um generierte Daten in dem durch die verschiedenen stationären und mobilen Knoten gebildeten Netzwerk zu verteilen und in einem zentralen Datenspeicher bereitzustellen. Dadurch kann eine Übertragung und Verteilung von erzeugten Daten sowie die Bereitstellung eines zentralen Zugriffs auch dann sichergestellt werden, wenn keine externe Kommunikationsinfrastruktur besteht.

Durch die Nutzung der Mobilität der Teilnehmer der Arbeitsstätte, müssen keine besonderen hardwaretechnischen Maßnahmen getroffen werden, abgesehen von der Bereitstellung entsprechender Kommunikationsmodule oder (wenn die Teilnehmer bereits derartige Module bzw. Sende- und Empfangseinheiten und Speicherbausteine aufweisen) eine entsprechenden Programmierung diese Module. In letzterem Fall können bestehende Geräte auf einfache Weise nachgerüstet bzw. bestehende Großbaustellen oder Minen mit dem erfindungsgemäßen Kommunikationssystem ausgestattet werden.

In einer möglichen Ausführungsform ist vorgesehen, dass mindestens ein stationäres Kommunikationsmodul eingerichtet ist, Daten aus dem lokalen Datenspeicher per Broadcast-Übertragung unabhängig von einer Anwesenheit oder einem Anfragesignal eines mobilen Kommunikationsmoduls zu senden, insbesondere in festgelegten Zeitabständen. Zur Übertragung kann ein verbindungsloses Broadcast-Protokoll verwendet werden. Ein entsprechendes Anfragesignal von einem die Broadcast-Übertragung empfangenden Empfänger kann möglicherweise anschließend gesendet werden, um ggf. bestimmte Daten anzufordern.

In einer weiteren möglichen Ausführungsform ist vorgesehen, dass mindestens ein mobiles Kommunikationsmodul eingerichtet ist, Daten aus dem lokalen Datenspeicher per Broadcast-Übertragung unabhängig von einer Anwesenheit oder einem Anfragesignal eines stationären oder mobilen Kommunikationsmoduls zu senden, insbesondere in festgelegten Zeitabständen. Zur Übertragung kann ein verbindungsloses Broadcast-Protokoll verwendet werden. Ein entsprechendes Anfragesignal von einem die Broadcast-Übertragung empfangenden Empfänger kann möglicherweise anschließend gesendet werden, um ggf. bestimmte Daten anzufordern.

In einer weiteren möglichen Ausführungsform ist das Kommunikationssystem dazu eingerichtet, dass eine Synchronisierung der lokalen Datenspeicher der mobilen und stationären Kommunikationsmodule und des zentralen Datenspeichers, d.h. eine Verbreitung generierter Daten im gesamten Netzwerk, durch Bewegungen der mobilen Kommunikationsmodule (d.h. der zugehörigen mobilen Geräte bzw. Nutzfahrzeuge) zwischen den Sende- und/oder Empfangsbereichen der stationären Kommunikationsmodule erfolgt, wobei diese Bewegungen nicht primär der Datenverbreitung bzw. -synchronisation dienen, sondern im Rahmen der üblichen Arbeitsabläufe erfolgen (z.B. die Fahrt eines Fahrmischers (= mobiler Knoten) von einem Mischwerk (= erster stationärer Knoten) zu einem zu errichtenden Gebäude (= zweiter stationärer Knoten), bei welchem der Beton eingesetzt wird). Dabei werden die übertragenen Daten während der Bewegung zwischen den Sende- und/oder Empfangsbereichen der stationären Kommunikationsmodule auf den lokalen Datenspeichern der Kommunikationsmodule zwischengespeichert bzw. ggf. auch permanent gespeichert (also auch nach einer Übertragung an den nächsten stationären Knoten - insbesondere so lange, bis auf Grundlage bestimmter Kriterien der Datenspeicher bereinigt wird und die entsprechenden Daten gelöscht werden).

In einer weiteren möglichen Ausführungsform ist vorgesehen, dass die zwischen den Kommunikationsmodulen ausgetauschten Daten in Datenpaketen zusammengefasst sind. Die Datenpakete können n-Tupel von Dateneinträgen repräsentieren. Die Datenpakete umfassen dabei Daten betreffend eine oder mehrere der folgenden Informationen:
- Einen Wert oder Verlauf eines von einer Erfassungseinheit erfassten Arbeitsparameters.
- Eine Identität einer Erfassungseinheit. Dies kann beispielsweise eine Netzwerk-ID (z.B. eine MAC-Adresse) des Sensorknotens als Datenquelle umfassen.
- Eine Identität des sendenden Kommunikationsmoduls und/oder des zugeordneten Geräts / Nutzfahrzeugs. Dies kann beispielsweise eine Netzwerk-ID des mobilen oder stationären Knotens umfassen.
- Eine das sendende Kommunikationsmodul und/oder das zugeordnete Gerät / Nutzfahrzeug betreffende Eigenschaft, beispielsweise den Typ bzw. das Modell des Geräts oder Nutzfahrzeugs, ein Fassungsvermögen oder sonstige Kapazität, eine Laufzeit, eine Abmessung oder dergleichen.
- Eine bisherige Fahrzeit und/oder eine aktuelle Position und/oder eine zurückgelegte Route und/oder eine noch zurückzulegende Route eines Nutzfahrzeugs.
- Einen Zeitstempel eines Datenpakets. Dieser kann den Zeitpunkt der Erfassung durch eine Erfassungseinheit und/oder einen Übertragungszeitpunkt und/oder einen Zeitpunkt einer Speicherung auf einem lokalen Datenspeicher betreffen.
- Einen aktuellen Zeitstempel, welcher beispielsweise die aktuelle Zeit zum Zeitpunkt der Übertragung repräsentiert.
- Eine Reihenfolge von auf einem lokalen Datenspeicher hinterlegten Datenpaketen, was ebenfalls eine Position eines Dateneintrags innerhalb einer Liste von mehreren Dateneinträgen umfassen kann. Die Reihenfolge kann sich aus den zugehörigen Zeitstempeln ergeben, wobei die Dateneinträge bzw. -pakete vorzugsweise nach Datum sortiert sind.
- Eine Priorität eines Datenpakets, wobei vorzugsweise jedem eingehenden Datenpaket nach festgelegten Kriterien eine Priorität (z.B. eine von drei möglichen Prioritätsstufen) zugewiesen wird.
- Eine Konfidenz eines Zeitstempels, vorzugsweise basierend auf einer Distanz zu einer Erfassungseinheit und/oder einer Anzahl von Datenübertragungen des zugeordneten Datenpakets. Die Konfidenz kann einen Zeitstempel bzw. eine dadurch repräsentierte Uhrzeit betreffen. Die Konfidenz kann auf einer Netzwerkdistanz zu einer Quelle mit hoher Konfidenz beruhen und beispielsweise auf das Vorhandensein einer Echtzeituhr zurückzuführen sein. Mit jeder Weiterleitung der Zeitinformationen kann die Konfidenz sinken.

In einer weiteren möglichen Ausführungsform ist vorgesehen, dass die zwischen den Kommunikationsmodulen ausgetauschten Daten in Datenpaketen zusammengefasst sind, wobei die Datenpakete n-Tupel von Dateneinträgen repräsentieren können. Die Kommunikationsmodule sind eingerichtet, eine definierte Anzahl von Datenpaketen gemeinsam zu senden, wobei die besagte definierte Anzahl vorzugsweise von einer maximalen Segmentgröße eines der drahtlosen Übertragung zugrundeliegenden Übertragungsprotokolls abhängt. Die definierte Anzahl kann insbesondere so gewählt sein, dass eine "Maximum Segment Size" (MSS) des zugrundeliegenden Übertragungsprotokolls bestmöglich ausgenutzt wird.

In einer weiteren möglichen Ausführungsform ist vorgesehen, dass die Kommunikationsmodule eingerichtet sind, die empfangenen Datenpakete anhand eines oder mehrerer festgelegter Kriterien in unterschiedlichen Prioritäten im lokalen Datenspeicher abzulegen. Die Prioritäten können von einzelnen Knoten bzw. Kommunikationsmodulen mit bestimmten Datenpaketen verknüpfbar sein, beispielsweise um bestimmte Daten später bevorzugt auszutauschen und/oder länger vorzuhalten. Die Kommunikationsmodule sind ferner eingerichtet, beim Senden die Prioritäten der Datenpakete zu berücksichtigen, vorzugsweise dergestalt, dass innerhalb der zuvor beschriebenen definierten Anzahl von gemeinsam gesendeten Datenpaketen mehr Datenpakete einer höheren Priorität als Datenpakete einer niedrigeren Priorität gesendet werden (beispielsweise doppelt so viele Datenpakete einer ersten Prioritätsstufe wie Datenpakete einer niedrigeren Prioritätsstufe usw.).

In einer weiteren möglichen Ausführungsform sind mindestens zwei Erfassungseinheiten vorgesehen, wobei jeder lokale Datenspeicher der stationären und mobilen Knoten in mehrere, jeweils einer Erfassungseinheit zugeordnete Speicherabschnitte unterteilt ist. Diese Speicherabschnitte, die einer bestimmten Erfassungseinheit bzw. Datenquelle zugeordnet sind, können auch als Datensilos bezeichnet werden. Die Kommunikationsmodule sind dabei eingerichtet, empfangene Daten einer bestimmten Erfassungseinheit zuzuordnen und im zugehörigen Speicherabschnitt bzw. Datensilo des lokalen Datenspeichers abzuspeichern.

Die Synchronisierung zwischen den einzelnen Knoten erfolgt dann bevorzugt derart, dass Lücken in bestimmten Speicherabschnitten durch Daten aus anderen Knoten gefüllt werden, falls der andere Knoten aktuellere bzw. fehlende Daten zu einer bestimmten Erfassungseinheit bereitstellt. Es werden also die jeweiligen Speicherabschnitte bzw. Datensilos aller Knoten miteinander synchronisiert.

In einer weiteren möglichen Ausführungsform ist vorgesehen, dass die Kommunikationsmodule eingerichtet sind, die empfangenen Daten im lokalen Datenspeicher in einer festgelegten Reihenfolge in Abhängigkeit von mit den Daten übertragenen Zeitstempeln abzuspeichern. Vorzugsweise werden die Datenpakete nach der Aktualität des neuesten Datums gespeichert. Insbesondere werden neuere bzw. aktuellere Datenpakete priorisiert gespeichert, wohingegen ältere Datenpakete unter bestimmten Umständen, beispielsweise wenn der Datenspeicher voll ist oder eine festgelegte Speichergrenze überschreitet, bevorzugt gelöscht werden.

Gemäß der Erfindung ist vorgesehen, dass die mobilen Kommunikationsmodule eingerichtet sind, bei Eintritt in den Empfangsbereich eines anderen Kommunikationsmoduls und/oder bei einer Registrierung, dass sich ein anderes Kommunikationsmodul im eigenen Sendebereich befindet, und/oder bei Empfang eines per Broadcast gesendeten Abgleichsignals ein Anfragesignal zu senden, um im eigenen lokalen Datenspeicher bislang fehlende Daten anzufordern.

Das Abgleichsignal umfasst Informationen betreffend den aktuellen Datenbestand des lokalen Datenspeichers des das Abgleichsignal broadcastenden Kommunikationsmoduls. Vorzugsweise senden alle stationären und/oder alle mobilen Kommunikationsmodule derartige "Hello-Signale" bzw. Abgleichsignale und geben damit den Datenbestand ihrer lokalen Datenspeicher kund, damit andere Kommunikationsmodule ihre eigenen Datenbestände damit abgleichen und ggf. (falls im eigenen lokalen Datenspeicher die aktuellsten Daten fehlen oder bzgl. älterer Daten Lücken bestehen) ein entsprechendes Anfragesignal zu senden. Das Anfragesignal kann beispielsweise eine Sequenznummer des letzten lokal verfügbaren Datums eines Dateneintrags umfassen. Alternativ oder zusätzlich kann das Anfragesignal Informationen betreffend eine oder mehrere Lücken im Datenbestand des lokalen Datenspeichers umfassen. Dadurch weiß das Kommunikationsmodul, welches das Anfragesignal erhält, welche Daten bei dem anfragenden Kommunikationsmodul fehlen und kann ein entsprechendes Antwortsignal mit den fehlenden Datenpaketen senden. Dadurch werden die beiden Datenspeicher synchronisiert.

Hierzu sind die Kommunikationsmodule eingerichtet, bei Empfang eines Anfragesignals bestimmte Daten, insbesondere im lokalen Datenspeicher des anfragenden Kommunikationsmoduls bislang fehlende Daten, an das anfragende Kommunikationsmodul zu senden.

Es kann eine bestimmte Priorisierung bzw. Reihenfolge der mit dem Antwortsignal ausgesendeten Datenpakete vorgesehen sein. So können beispielsweise vorrangig die aktuellsten, im anfragenden Datenspeicher fehlenden Datenpakete gesendet und erst anschließend ältere Datenlücken geschlossen bzw. aufgefüllt werden. Steht im empfangenden Datenspeicher nicht genügend Speicherkapazität zum Eintragen der aktuellsten Daten und/oder zum Auffüllen der Lücken bereit, wird der Datenspeicher vorzugsweise wie zuvor beschrieben bereinigt.

In einer weiteren möglichen Ausführungsform ist vorgesehen, dass die Kommunikationsmodule eingerichtet sind, nur empfangene Daten, die nicht bereits auf dem lokalen Datenspeicher hinterlegt sind, auf dem lokalen Datenspeicher abzulegen, wobei vorzugsweise nur Daten gespeichert werden, die ein festgelegtes Kriterium erfüllen, insbesondere einen jüngeren Zeitstempel als einen Referenzzeitstempel und/oder eine anhand eines oder mehrerer festgelegter Kriterien zugeordnete Priorität aufweisen. Vorzugsweise kommt es gar nicht erst zu einem Übersenden von Datenpaketen, welche auf dem lokalen Datenspeicher des anfragenden Kommunikationsmoduls bereits hinterlegt sind, da zuvor das anfragende Kommunikationsmodul vorzugsweise das zuvor beschriebene Anfragesignal mit entsprechenden Informationen übermittelt, die es dem anderen Kommunikationsmodul erlauben, gezielt nur fehlende Daten zu übermitteln.

In einer weiteren möglichen Ausführungsform ist vorgesehen, dass das Kommunikationssystem mindestens eine stationäre Arbeitsmaschine mit einem stationären Kommunikationsmodul und mindestens ein Nutzfahrzeug mit einem mobilen Kommunikationsmodul umfasst. Vorzugsweise ist ferner mindestens ein mobiles Gerät mit einem mobilen Kommunikationsmodul vorhanden, welches von einer Bedienperson tragbar ist. Dadurch kann die Mobilität der Bedienperson(en) sowie des oder der Nutzfahrzeuge für die dezentrale Verteilung und Synchronisation der durch die Sensorknoten erzeugten Daten ausgenutzt werden.

In einer weiteren möglichen Ausführungsform ist vorgesehen, dass mindestens eine stationäre Arbeitsmaschine als Arbeitsmaschine zur Lagerung und/oder Herstellung und/oder Verarbeitung von Beton und mindestens ein Nutzfahrzeug als fahrbarer Betonmischer bzw. Fahrmischer oder als fahrbare Betonpumpe (z.B. als Autobetonpumpe) ausgeführt ist, wobei die Arbeitsstätte vorzugsweise eine Großbaustelle ist.

Alternativ kann es sich bei der Arbeitsstätte um eine Mine handeln, wobei mindestens ein Nutzfahrzeug als Mining Truck bzw. Muldenkipper und/oder als Bagger ausgeführt sein kann. Ebenfalls ist ein Szenario denkbar, bei der mindestens ein statische Arbeitsmaschine ein Turmdrehkran und/oder mindestens ein Nutzfahrzeug ein Bagger, Mobilkran oder eine beliebige andere mobile Baumaschine ist.

Prinzipiell kommen alle Arten von stationären und mobilen Baumaschinen und Geräten in Frage, die auf Baustellen und in Minen zum Einsatz kommen können. Das erfindungsgemäße Kommunikationssystem ist dabei nicht auf ein bestimmtes Beispiel bzw. bestimmte Anwendungen und Baumaschinen beschränkt.

In einer weiteren möglichen Ausführungsform ist vorgesehen, dass die Datenpakete Daten betreffend eine oder mehrere der folgenden Informationen umfassen:
- eine Betonqualität,
- eine Betonzusammensetzung,
- eine Wasserzugabe zum Beton,
- eine Eigenschaft des Betons wie beispielsweise Viskosität oder Wassergehalt,
- eine Fahrzeit und/oder Position und/oder Route eines fahrbaren Betonmischers bzw. Fahrmischer oder einer fahrbaren Betonpumpe,
- einen Einbringort von Beton.

Prinzipiell können die übertragenen bzw. synchronisierten Daten jegliche Informationen betreffen, die mit der Herstellung, der Verarbeitung und/oder dem Transport von Beton auf derartigen Baustellen zu tun haben.

Die Datenverwaltungsstation ist vorzugsweise mit einem externen Netzwerk, beispielsweise einem externen Kommunikationsnetzwerk und/oder dem Internet, verbunden. Dadurch kann auch eine nicht vor Ort an der Arbeitsstätte, sondern an einem entfernten Standort befindliche Stelle, beispielsweise ein Baustellenmanagement, Zugriff auf die Daten erhalten.

Auch wenn das erfindungsgemäße Kommunikationssystem eine dezentrale Erzeugung und Verteilung von Daten ermöglicht, sollte auf dem zentralen Datenspeicher ein möglichst kompletter Datensatz mit aktuellen und älteren Daten vorliegen, um einen zeitlichen Verlauf der Daten nachvollziehen zu können. Ziel der Datenübertragung über langsamere, ggf. sich nicht deterministisch bewegende mobile Knoten ist es daher insbesondere auch, die Daten irgendwann an die Datenverwaltungsstation zu übertragen, damit diese auf dem zentralen Datenspeicher abgelegt werden können.

Die vorliegende Erfindung betrifft ferner ein Verfahren zum Austausch von Daten mittels des erfindungsgemäßen Kommunikationssystems. Das Kommunikationssystem kann gemäß jeder der vorgenannten Ausführungsformen ausgebildet sein, wobei sich die zuvor genannten Vorteile und Eigenschaften ergeben. Bei dem Verfahren werden Daten indirekt von einem ersten stationären Kommunikationsmodul an ein zweites stationäres Kommunikationsmodul übertragen, deren Sende- und Empfangsbereiche sich nicht überlappen, die also aufgrund der begrenzten Reichweite nicht direkt Daten drahtlos untereinander austauschen können. Der Datenaustausch zwischen den stationären Kommunikationsmodulen erfolgt dadurch, dass sich ein erstes mobiles Kommunikationsmodul (bzw. ein Nutzfahrzeug oder ein beispielsweise von einer Bedienperson getragenes mobiles Gerät mit einem solchen) in den Sendebereich des ersten stationären Kommunikationsmoduls bewegt, auf dem lokalen Datenspeicher des ersten stationären Kommunikationsmoduls hinterlegte Daten drahtlos empfängt und auf dem eigenen lokalen Datenspeicher ablegt.

Dieser Vorgang kann das Aussenden eines Abgleichsignals bzw. "Hello-Signals" durch das erste stationäre Kommunikationsmodul, insbesondere per Broadcast-Übertragung, umfassen, womit dieses mitteilt, welcher Datenbestand sich auf dessen lokalem Datenspeicher befindet, woraufhin das mobile Kommunikationsmodul die über das Abgleichsignal übermittelten Informationen mit dem Datenbestand des eigenen lokalen Datenspeichers abgleicht und ein entsprechendes Anfragesignal sendet, über welches dem stationären Kommunikationsmodul mitgeteilt wird, welche Daten sich auf dem lokalen Datenspeicher der mobilen Kommunikationseinheit befinden bzw. welche Daten fehlen. In Reaktion auf das Anfragesignal kann das stationäre Kommunikationsmodul dann die fehlenden bzw. geforderten Datenpakete an das mobile Kommunikationsmodul schicken, wo diese dann im lokalen Datenspeicher abgelegt werden. Dadurch können die lokalen Datenspeicher synchronisiert werden.

Bei dem Verfahren bewegt sich das mobile Kommunikationsmodul, welches nun einen aktualisierten bzw. synchronisierten lokalen Datenspeicher aufweist, aus dem Sendebereich des ersten stationären Kommunikationsmoduls hinaus, beispielsweise um einer regulären Arbeitsfunktion nachzugehen (z.B. ein Fahrmischer, dar sich von einem Mischwerk zu einem Einbringort für den Beton an einem zu errichtenden Gebäude bewegt) und nach einer gewissen Zeit in den Empfangsbereich des zweiten stationären Kommunikationsmoduls hinein. Diese Zeit kann Minuten, Stunden oder sogar Tage dauern. In dieser Zeit sind die zu verteilenden Daten auf dem lokalen Datenspeicher des mobilen Kommunikationsmodul zwischengespeichert (was nicht bedeutet, dass diese Daten anschließend, nach einer Übertragung an das zweite stationäre Kommunikationsmodul wieder gelöscht werden müssen - vorzugsweise bleiben sie auf dem lokalen Datenspeicher des mobilen Kommunikationsmoduls, bis der Speicher aufgrund der begrenzten Speicherkapazität bereinigt werden muss). Nach Eintritt in den Empfangsbereich des zweiten stationären Kommunikationsmoduls überträgt das mobile Kommunikationsmodul auf dem lokalen Datenspeicher gespeicherte Daten drahtlos an das zweite stationäre Kommunikationsmodul, wobei das zweite stationäre Kommunikationsmodul die empfangenen Daten auf dessen lokalem Datenspeicher ablegt. Auch bei diesem Vorgang kann wieder ein entsprechendes Abgleichsignal (diesmal vom mobilen Kommunikationsmodul) und ein darauffolgendes Anfragesignal (diesmal vom stationären Kommunikationsmodul) gesendet werden. Bei dem zweiten stationären Kommunikationsmodul kann es sich um dasjenige der Datenverwaltungsstation handeln, wobei die übertragenen Daten anschließend auf dem zentralen Datenspeicher archiviert werden.

Dies bedeutet, dass die vom mobilen Kommunikationsmodul an das zweite stationäre Kommunikationsmodul gesendeten Daten nicht identisch sein müssen zu den vom ersten stationären Kommunikationsmodul empfangenen Daten, da generell die übermittelten Daten insbesondere vom Datenbestand des lokalen Datenspeicher des anfragenden bzw. empfangenen Kommunikationsmodul abhängen. So könnte es beispielsweise sein, dass zuvor bereits ein anderes Nutzfahrzeug in den Empfangsbereich des zweiten stationären Kommunikationsmoduls eingefahren ist und dessen mobiles Kommunikationsmodul einen Teil der Daten, den das zu einem späteren Zeitpunkt ankommende mobile Kommunikationsmodul vom ersten stationären Kommunikationsmodul empfangen hat, bereits auf das zweite stationäre Kommunikationsmodul übertragen hat.

Durch das erfindungsgemäße Verfahren werden die lokalen Datenspeicher der verschiedenen stationären und mobilen Knoten basierend auf den Bewegungen der mobilen Knoten zwischen den verschiedenen Sende- und Empfangsbereichen nach und nach synchronisiert und an einem Sensorknoten erzeugten Daten somit schließlich an den zentralen Datenspeicher übertragen.

In einer möglichen Ausführungsform ist vorgesehen, dass sich ein zweites mobiles Kommunikationsmodul in den Sendebereich des zweiten stationären Kommunikationsmoduls bewegt, auf dem lokalen Datenspeicher des zweiten stationären Kommunikationsmoduls hinterlegte Daten des ersten stationären Kommunikationsmoduls drahtlos empfängt und auf dem eigenen lokalen Datenspeicher ablegt, sich aus dem Sendebereich des zweiten stationären Kommunikationsmoduls hinaus- und in den Empfangsbereich des stationären Kommunikationsmoduls der Datenverwaltungsstation hineinbewegt und auf dem lokalen Datenspeicher zwischengespeicherte Daten drahtlos an das stationäre Kommunikationsmodul der Datenverwaltungsstation sendet, wobei die empfangenen Daten auf dem zentralen Datenspeicher ablegt werden. Auch hierbei können wieder entsprechende Abgleich- und Anfragesignale ausgetauscht werden.

In einer weiteren möglichen Ausführungsform ist vorgesehen, dass die mobilen Kommunikationsmodule mobilen Geräten und/oder beweglichen Nutzfahrzeugen zugeordnet sind, welche sich nicht primär zum Zwecke der indirekten Datenübertragung zwischen den Sende- und Empfangsbereichen der stationären Kommunikationsmodule bewegen, sondern insbesondere zur Durchführung von Arbeitsfunktionen.

Die Erfindung betrifft ferner ein Computerprogrammprodukt, welches Befehle umfasst, die bei der Ausführung des Programms bewirken, dass Kommunikationsmodule des erfindungsgemäßen Kommunikationssystems die auf die Kommunikationsmodule bezogenen Schritte des erfindungsgemäßen Verfahrens ausführen. Dabei ergeben sich die vorstehend in Bezug auf das Kommunikationssystem und -verfahren beschriebenen Eigenschaften und Vorteile.

Die Nutzfahrzeuge können von Bedienern manuell, semiautonom oder autonom gesteuert werden. Mit anderen Worten kann das erfindungsgemäße Kommunikationssystem sowohl bei (zumindest teilweise) von menschlichen Bedienern betriebenen Baustellen und Minen zum Einsatz kommen, als auch bei vollautomatisch betriebenen Baustellen und Minen, bei denen sich die Nutzfahrzeuge autonom auf der Arbeitsstätte bewegen.

Weitere Merkmale, Einzelheiten und Vorteile der Erfindung ergeben sich aus den nachfolgend anhand der Figuren erläuterten Ausführungsbeispielen. Dabei zeigen:
- Figur 1:: eine schematische Darstellung des erfindungsgemäßen Kommunikationssystems gemäß einem Ausführungsbeispiel;
- Figur 2:: eine schematische Darstellung des erfindungsgemäßen Kommunikationssystems gemäß einem weiteren Ausführungsbeispiel;
- Figur 3:: eine schematische Darstellung des Prinzips der Datenübertragung und - synchronisation gemäß einem Ausführungsbeispiel;

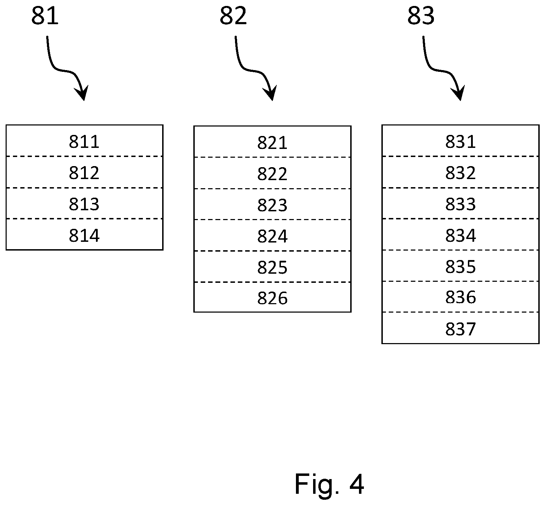

- Figur 4:: eine schematische Darstellung des Prinzips der Einteilung von Dateneinträgen in Prioritätslisten gemäß einem Ausführungsbeispiel; und
- Figur 5:: eine schematische Darstellung des erfindungsgemäßen Kommunikationssystems gemäß einem weiteren Ausführungsbeispiel.

Mittels des erfindungsgemäßen Kommunikationssystems und -verfahrens können Daten, die beispielsweise von Baumaschinen generiert werden, bzw. für Baumaschinen und deren Bediener von Bedeutung sind, in Szenarien ohne existierende bzw. zuverlässige externe Kommunikationsinfrastruktur verteilt werden.

Im Folgenden werden eine Reihe von Ausführungsbeispielen mit Bezug auf die Betonherstellung und -verarbeitung beschrieben, wobei das erfindungsgemäße Kommunikationssystem nicht auf diesen Anwendungsfall beschränkt ist, sondern grundsätzlich bei beliebigen Baustellen, Einsatzorten und Minen bzw. bei beliebigen Nutzfahrzeugen, Arbeitsmaschinen, Erfassungseinheiten und sonstigen mobilen Geräten zum Einsatz kommen kann.

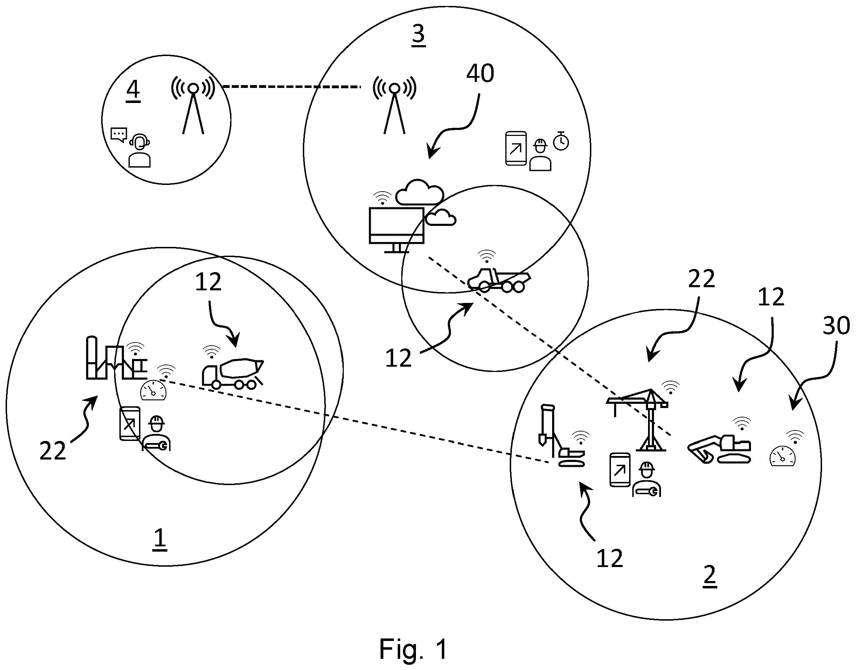

Wie in Figur 1 schematisch illustriert ist, umfassen Großbaustellen und Minen typischerweise mehrere räumlich voneinander entfernte Standorte 1, 2, 3, die aufgrund der Entfernungen zwischen diesen Standorten ohne eine diese Standorte kommunikativ miteinander verbindende externe Infrastruktur keine direkte Kommunikationsmöglichkeit untereinander aufweisen. In dem Ausführungsbeispiel der Figur 1 ist ein erster Standort 1 mit einer Betonmischanlage dargestellt, während für den zweiten Standort 2 beispielhaft mehrere Baumaschinen wie ein Turmdrehkran, eine Drehbohranlage und ein Hydraulikbagger eingezeichnet sind, um einen Baustellenstandort anzudeuten. An diesen Standorten 1, 2 können sich zudem diverse Erfassungseinheiten 30 mit Sensoren zur Erfassung bestimmter Arbeitsprozessparameter befinden (beispielsweise eine Betonviskosität, eine Last bzw. ein Gewicht, eine Bohrtiefe, eine Zeitspanne, eine Position, eine Anzahl aufgenommener Arbeitszyklen etc. - um nur einige mögliche Beispiele zu nennen), deren Daten aufbereitet, archiviert und einen zentralen Zugriff zugänglich gemacht werden sollen.

An einem dritten Standort 3 befindet sich in dem hier illustrierten Schema eine Datenverwaltungsstation 40 wie beispielsweise eine Baustellenverwaltung, an der sich ein lokaler Server bzw. zentraler Datenspeicher befindet, der die an den verschiedenen Standorten und Maschinen erzeugten Daten speichert. Die angesprochene Aufbereitung, Archivierung und Zugriffsmöglichkeit werden können über die Datenverwaltungsstation 40 bereitgestellt werden. Hierzu müssen die erzeugten Daten an die Datenverwaltungsstation 40 übertragen werden. Ebenfalls ist in der Figur 1 ein weiterer Management-Standort 4 eingezeichnet, welcher auf die Daten der Datenverwaltungsstation 40 zugreift und sich nicht an der Arbeitsstätte, d.h. der Großbaustelle oder Mine, befinden muss. Hierbei kann es sich beispielsweise um eine Service-Station oder einen Backoffice-Standort handeln.

Selbst innerhalb der einzelnen Standorte 1, 2, 3 ist durch begrenzte Kommunikationsreichweite bedingt durch Dämpfung und regulatorisch begrenzte Signalstärke eine Kommunikation zwischen allen Netzwerkteilnehmern nicht immer gegeben. Das Kommunikationsnetzwerk auf der Arbeitsstätte zerfällt somit in mehrere Segmente zwischen denen keine, bzw. nur eine eingeschränkte Kommunikation möglich ist.

Dieses Problem wird erfindungsgemäß dadurch gelöst, dass die Mobilität der Nutzfahrzeuge und der menschlichen Teilnehmer genutzt wird, die sich im Rahmen ihrer normalen Arbeitstätigkeit zwischen den verschiedenen Standorten 1, 2, 3 bewegen und hierbei die verschiedenen erzeugten Daten verteilen sowie die lokalen und zentralen Datenspeicher der verschiedenen Teilnehmer und Standorte synchronisieren. In der Figur 1 sind beispielhaft zwei Nutzfahrzeuge 12 in Form eines Fahrmischers und eines Muldenkippers gezeigt.

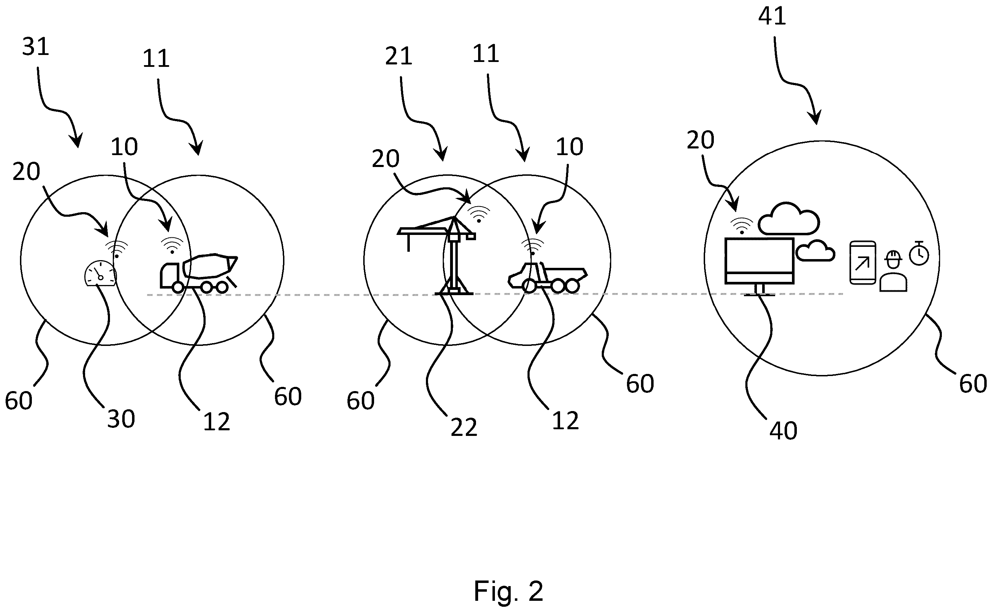

In der Figur 2 ist das Prinzip dieser Übertragungsmethode anhand eines weiteren Ausführungsbeispiels schematisch illustriert. Hierbei sind drei räumlich voneinander entfernte Standorte eingezeichnet: eine stationäre Erfassungseinheit 30, welche mindestens einen Arbeitsprozessparameter erfasst, eine stationäre Arbeitsmaschine 22 (hier beispielhaft als Kran eingezeichnet) und eine Datenverwaltungsstation 40. Wiederum beispielhaft sind zwei bewegliche Nutzfahrzeuge 12 eingezeichnet, die sich auf der Arbeitsstätte bewegen: ein Fahrmischer 12 und ein Muldenkipper 12. Jeder dieser Akteure weist ein Kommunikationsmodul 10, 20 mit einer Sendeeinheit zum drahtlosen Senden von Daten, einer Empfangseinheit zum drahtlosen Empfangen von Daten und einen lokalen Datenspeicher 50 um Speichern von empfangenen Daten auf. Die Erfassungseinheit 30 kann das Kommunikationsmodul 20 umfassen oder mit diesem in Signalverbindung stehen.

Die den stationären Geräten (Erfassungseinheit 30, Arbeitsmaschine 22, Datenverwaltungsstation 40) zugeordneten Kommunikationsmodule werden als stationäre Kommunikationsmodule 20 bezeichnet, da sich diese nicht auf der Arbeitsstätte bewegen. Die den beweglichen Nutzfahrzeugen 12 (und ggf. vorhandenen, von menschlichen Bedienern getragenen mobilen Geräten) zugeordneten Kommunikationsmodule 10 werden als mobile Kommunikationsmodule 10 bezeichnet, da sich diese auf der Arbeitsstätte bewegen und somit ihre Position wechseln können.

Die Sende- und Empfangseinheiten der Kommunikationsmodule 10, 20 besitzen eine gewisse, begrenzte Reichweite, die sich von Kommunikationsmodul zu Kommunikationsmodul unterscheiden oder identisch sein können. Ebenfalls können die Sende- und Empfangseinheiten eines Kommunikationsmoduls 10, 20 unterschiedliche oder identische Reichweiten besitzen. Der Einfachheit halber sind in den Folgenden einheitliche Reichweiten der Kommunikationsmodule 10, 20 als Kreise 60 angedeutet und es wird nicht mehr zwischen Sende- und Empfangsreichweiten bzw. -bereichen unterschieden. Dies soll aber die zuvor angesprochene Möglichkeit unterschiedlicher Reichweiten nicht ausschließen.

Die beweglichen Teilnehmer 12 mit ihren mobilen Kommunikationsmodulen 10 werden im Folgenden auch als mobile Knoten 21 bezeichnet, während die statischen Teilnehmer mit ihren stationären Kommunikationsmodulen 20 als stationäre Knoten 21 bezeichnet werden. Die Erfassungseinheiten 30 mit ihren stationären Kommunikationsmodulen 20 werden als Sensorknoten bezeichnet, während die Datenverwaltungsstation 40 mit ihrem stationären Kommunikationsmodul 20 als Verwaltungsknoten 41 bezeichnet wird. Diese Knoten 11, 21, 31, 41 bilden ein drahtloses Kommunikationsnetzwerk. In der Figur 2 sind somit beispielhaft zwei mobile Knoten 11 gezeigt, der Fahrmischer 12 als erster mobiler Knoten 11 und der Muldenkipper 12 als zweiter mobiler Knoten 11.

Hierbei ist nicht ausgeschlossen, dass innerhalb eines Standorts (z.B. eine Baustelle mit mehreren, nahe beieinanderstehenden Arbeitsmaschinen) mehrere Kommunikationsmodule 10, 20 einander überlappende Sende- und/oder Empfangsbereiche 60 haben und daher unabhängig von den mobilen Knoten 11 Daten direkt untereinander austauschen können. Im Folgenden wird der Fall betrachtet, dass die verschiedenen stationären Knoten 21 so weit räumlich auseinander liegen, dass sich ihre Sende- und/oder Empfangsbereiche 60 nicht überlappen und daher Daten nicht direkt ausgetauscht werden können.

Anhand der Figur 2 soll nun das Funktionsprinzip des erfindungsgemäßen Kommunikationssystems näher erläutert werden:
Die am Sensorknoten 31 entstehenden Daten werden durch das mobile Kommunikationsmodul 10 des ersten mobilen Knoten 11 empfangen. Dieser bewegt sich zu einem späteren Zeitpunkt in den Sende- und/oder Empfangsbereich 60 des stationären Knotens 21 und übergibt diesem die Daten des Sensorknotens 31. Sobald der zweite mobile Knoten 11 in den Sende- und/oder Empfangsbereich 60 des stationären Knotens 21 kommt, werden die Daten an den zweiten mobilen Knoten 11 weitergereicht. Bewegt sich dieser in den Sende- und/oder Empfangsbereich 60 des Verwaltungsknotens mit seinem lokalen Server (bzw. dessen lokaler Kommunikationsinfrastruktur, die mit dem stationären Kommunikationsmodul 20 verbunden ist), übergibt er die Daten, wo sie im aufgearbeitet, im zentralen Datenspeicher archiviert und den Bedienern zur Verfügung gestellt werden. Auf diese Weise können generierte Daten im gesamten Netzwerk verteilt werden und stehen zu einem gewissen Zeitpunkt allen Geräten und Bedienern zur Verfügung.

Damit diese Datenübertragung effektiv funktioniert, werden in den folgenden Abschnitten drei wesentliche Funktionen beschrieben:
- Generierung und Speicherung der Daten,
- Datenaustausch zwischen den Geräten bzw. Knoten,
- infrastrukturlose Kommunikation.

Diese bilden zusammen mit dem grundlegenden Konzept das System bzw. Verfahren zur infrastrukturlosen Datenverteilung für Arbeitsstätten.

Jede Arbeitsmaschine bzw. Baumaschine 22 sowie jedes Nutzfahrzeug 12, beispielsweise Maschinen der Betonherstellung, zum Betontransport und zur Betonverarbeitung, erzeugt während ihrer Laufzeit Daten, die potenziell für andere Maschinen und menschliche Operateure von Interesse sind. Diese Daten betreffen beispielsweise:
- eine Betonqualität,
- eine Betonrezeptur,
- eine Viskosität des Betons,
- einen Wassergehalt des Betons,
- Fahrzeiten von Fahrmischern,
- Positionsdaten für ein Flottenmanagementsystem,
- eine eventuelle Wasserzugabe zum Beton und/oder
- eine Protokollierung des Betoneinbringorts.

Je nach Art des Netzwerkteilnehmers können diese Daten entweder lokal zwischengespeichert oder direkt versandt werden. Insbesondere Daten von Drittgeräten, die nicht unmittelbar am infrastrukturlosen Datenverteilungsverfahren teilnehmen (im folgenden Drittgerät genannt), können so aufgenommen und von aktiven Netzwerkteilnehmern weiterverteilt werden.

Die Kommunikationsmodule 10, 20 können prinzipiell volatile und nicht-volatile Speichermöglichkeiten bieten. Bevorzugt sind die lokalen Datenspeicher 50 als nicht-volatile Speicher zum permanenten Speichern von Daten ausgebildet. Daten, die auf einer Arbeitsmaschine 22, einem Nutzfahrzeug 12 oder einem sonstigen mobilen Gerät lokal erzeugt (oder von einem Drittgerät empfangen) werden, werden insbesondere mit einer Sequenznummer und, falls verfügbar, einem Zeitstempel versehen, um die Daten später in eine zeitliche Reihenfolge zu bringen. Ebenso wird vorzugsweise die vollständige Datenquelle anhand einer eindeutigen Netzwerkknoten-ID (z.B. die MAC-Adresse), das Subsystem und/oder weiterer Hierarchien zum Datum hinterlegt. Zusätzlich können generierende Anwendungen vorzugsweise eine Priorität hinterlegen, um Daten später bevorzugt auszutauschen oder länger vorzuhalten.

Die so mit Zusatzinformationen versehenen Daten werden im lokalen Datenspeicher in einem Speicherabschnitt, auch Datensilo genannt, gespeichert. Dabei bekommt jede Datenquelle (d.h. jede Erfassungseinheit) ihr eigenes Silo zugewiesen, in dem die Daten in korrekter Reihenfolge gespeichert werden. Werden neue Daten empfangen oder generiert, werden sie in die entsprechenden Datensilos an die korrekte Stelle eingereiht (dies orientiert sich insbesondere an den zugeordneten Zeitstempeln). Der dem jeweils für die drahtlose Datenübertragung zugrundeliegenden Übertragungsprotokoll zur Verfügung gestellte Speicher wird insbesondere partitioniert, um einen eigenen Bereich für lokale und empfangene Daten vorzuhalten.

Innerhalb der Datensilos bzw. der Speicherpartitionen wird der zur Verfügung stehende Speicherplatz irgendwann aufgebraucht sein. Dann müssen bereits eingelagerte Daten aus den Datensilos entfernt werden. Hierzu wird vorzugsweise ein Algorithmus verwendet, der damit beginnt, die ältesten und niederpriorsten Daten freizugeben. Das zuletzt empfangene, bzw. generierte Datum eines Datensilos wird dabei weiterhin vorgehalten, bis ein parametrierbares Maximalalter überschritten wurde. Sollte der Speicher dennoch nicht ausreichen, um neue Daten aufzunehmen, werden zuerst die niederpriorsten, ältesten Daten gelöscht.

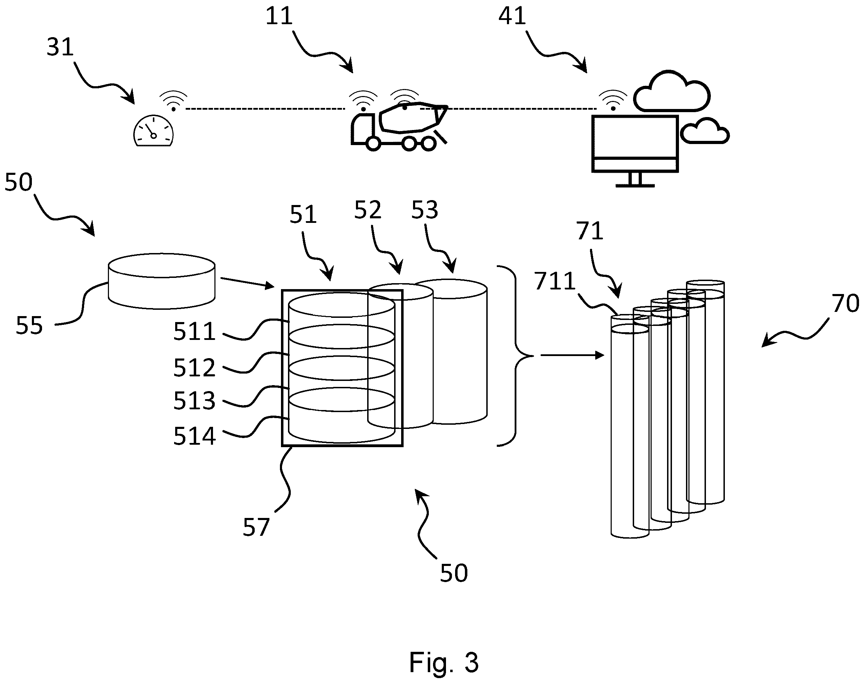

Die Figur 3 illustriert anhand eines Ausführungsbeispiels schematisch den Datenaustausch und die Synchronisation zwischen den lokalen Datenspeichern 50 bzw. den Datensilos der verschiedenen stationären und mobilen Knoten 11, 21, 31, 41. In der Figur 3 ist ein Sensorknoten 31 abgebildet, der einen aktuellen Datensatz 55 aufgenommen hat (der ggf. vorhandene restliche Datenbestand des lokalen Datenspeichers 50 des Sensorknotens 31 ist nicht abgebildet). Dieser soll nun an den zentralen Datenspeicher 70 der Datenverwaltungsstation 41 übertragen und dort archiviert werden. Es ist ein mobiler Knoten 11 mit seinem lokalen Datenspeicher 50 abgebildet, welcher wiederum in drei Datensilos 51, 52, 53 unterteilt ist.

Das erste Datensilo 51 ist dem hier eingezeichneten Sensorknoten 31 zugeordnet. Bei der Datenübertragung zwischen Sensorknoten 31 und mobilem Knoten 11 wird der zuletzt aufgenommene Datensatz 55 in das zugehörige Datensilo 51 des mobilen Knotens 11 gespeichert. Dort sind die Dateneinträge in nach Datum bzw. Zeitstempel sortierter Reihenfolge abgelegt. Der aktuellste Datensatz 55 wird als Datensatz 511 im Datensilo 51 abgespeichert. In der Figur 3 sind zu Illustrationszwecken auch drei ältere Datensätze 512, 513 und 514 gezeigt. Das Datensilo 51 besitzt eine maximale Speicherkapazität, die in der Figur 3 als Kasten 57 angedeutet ist. Die einzelnen Datensilos der lokalen Datenspeicher 50 können identische oder aber (z.B. abhängig von den Arten bzw. Größen der typischerweise von den jeweiligen Erfassungseinheiten 30 bereitgestellten Datensätze) unterschiedliche Speicherkapazitäten 57 besitzen.

Über den Datentransport mittels der mobilen Knoten 11 werden die Daten irgendwann zu einen späteren Zeitpunkt der Datenverwaltungsstation 40 bzw. dem Verwaltungsknoten 41 bereitgestellt. In der Figur 3 ist der zentrale Datenspeicher 70 der Datenverwaltungsstation 40 mit größerer Speicherkapazität und einer entsprechenden Anzahl von Datensilos dargestellt. Hier werden die verschiedenen, von den unterschiedlichen Erfassungseinheiten 30 erzeugten Datensätze (aktuelle und ältere) archiviert. Der erzeugte Datensatz 55 wird letztendlich im entsprechenden Datensilo 71 als aktuellster Datensatz 711 abgelegt.

Der Datenaustausch basiert in einer bevorzugten Ausführungsform auf zwei Mechanismen:
- Bekanntgabe der vorhandenen Daten,
- Datenanfrage und -antworten.

Zur Bekanntgabe der vorhandenen Daten werden durch die Kommunikationseinheiten 10, 20 der stationären und bevorzugt auch der mobilen Knoten 11, 21, 31, 41 zyklisch Datenpakete, sogenannte "Hello-Pakete", (= Abgleichsignal) versendet, die insbesondere Informationen über den versendenden Netzwerkknoten 11, 21, 31, 41 (d.h. das sendende Kommunikationsmodul 10, 20 und/oder das damit ausgestattete mobile Gerät, Nutzfahrzeug 12 oder stationäre Arbeitsmaschine 22), sowie den auf dem lokalen Datenspeicher 50 vorhandenen Daten umfassen. Das Aussenden der Abgleichsignale bzw. Hello-Pakete erfolgt insbesondere per Broadcast, um den sich ständig ändernden Bedingungen nicht oder nicht immer vorhersagbaren Bewegungen der mobilen Knoten 11, die auf Arbeitsstätten wie Großbaustellen und Minen vorherrschen, Rechnung zu tragen und (im Gegensatz beispielsweise zu Roboterbewegungen, die einer vorbestimmten Trajektorie folgen und zu bestimmten Zeitpunkten bestimmte Positionen anfahren). Die Knoteninformationen können beispielsweise einen oder mehrere der folgende Dateneinträge umfassen:
Drahtloskanalinformationen:
   - Anzahl der unabhängigen Empfangs- und Sendeeinheiten des sendenden Kommunikationsmoduls 10, 20 und/oder des sendenden stationären oder mobilen Knotens 11, 21, 31, 41;
   - Bei Nutzung von Frequenzumschaltung: eine verbleibende Verweildauer auf einem aktuellen Frequenzkanal und/oder ein zukünftiger Frequenzkanal;
Geräteeigenschaften:
   - Eindeutige Netzwerkknoten-ID;
   - Typ des Kommunikationsmoduls 10, 20 und/oder des dieses tragenden Nutzfahrzeugs 12, mobilen Geräts / der Arbeitsmaschine 22 (z.B. im einfachsten Fall die Info "mobil" oder "stationär");
Zeitbasis:
   - Aktuelle Uhrzeit / Datumsangabe bzw. aktueller Zeitstempel;
   - Konfidenz für die Uhrzeit: basierend auf der Netzwerkdistanz zu einer Quelle mit hoher Konfidenz und weiteren Informationen, wie z.B. dem Vorhandensein einer Echtzeituhr. Mit jeder Weiterleitung der Zeitinformation sinkt die Konfidenz.

Zur Bekanntmachung der vorhandenen Daten werden im Hello-Paket bevorzugt N Wertetupel übertragen. Die Zahl N wird dabei so gewählt, dass die MSS (Maximum Segment Size) des zugrunde liegenden Übertragungsprotokolls bestmöglich ausgenutzt wird und ein Hello-Paket in einem MAC-(Media Access Control)-Rahmen des unterliegenden Drahtlosprotokolls übertragen werden kann.

Ein Wertetupel beschreibt hierbei den Zustand genau eines der zuvor beschriebenen Datensilos 51, 52, 53, 71 etc. auf dem sendenden Knoten 11, 21, 31, 41. Zu den übertragenen Werten gehören beispielsweise ein oder mehrere der folgenden Werte:
- Netzwerk ID des Quellknotens;
- Datenquelle auf dem Quellknoten;
- Sequenznummer des letzten verfügbaren Datums;
- falls vorhanden: Zeitstempel des letzten verfügbaren Datums;
- eine zugeordnete Priorität.

Um mehr als N Wertetupel übertragen zu können, wird bevorzugt ein Schema verwendet, bei dem nacheinander alle vorliegenden Siloinformationen über Hello-Pakete bereitgestellt werden. Dazu werden so viele Listen erstellt, wie Prioritätsstufen vorgesehen sind (z.B. drei Listen für drei Prioritätsstufen "niedrig", "mittel" und "hoch"). In diese Listen werden die Dateneinträge gemäß ihrer Priorität eingeordnet und nach der Aktualität des neusten Datums im Datensilo sortiert. In jeder Liste können Einträge aus unterschiedlichen Datensilos vermischt sein. Alternativ können eigene Prioritätslisten für jedes Datensilo vorgesehen sein.

Die Figur 3 illustriert ein Ausführungsbeispiel mit drei Listen 81, 82, 83 für drei Prioritäten: eine erste Liste 81 mit Dateneinträgen 811-814 der höchsten Prioritätsstufe, eine zweite Liste 82 mit Dateneinträgen 821-826 der mittleren Prioritätsstufe und eine dritte Liste 83 mit Dateneinträgen 831-837 der niedrigsten Prioritätsstufe. Die Listen 81, 82, 83 besitzen in diesem Ausführungsbeispiel unterschiedlich viele Dateneinträge, wobei dies auch anders sein kann (z.B. könnte die erste Liste 81 mehr Dateneinträge besitzen als die zweite oder dritte Liste 82, 83, usw.). Wie bereits angedeutet, könnten die Dateneinträge einer Liste zu unterschiedlichen Datensilos gehören oder aber nur Dateneinträge eines Datensilos enthalten.

Die Listen 81, 82, 83 werden bevorzugt iteriert und bei jedem Hello-Paket Daten von N Einträgen der ersten oder zweiten, etc. Liste 81, 82, 83 im Hello-Paket verschickt. Um Daten der höchsten Priorität schneller im Netzwerk zu verteilen, können diese häufiger, beispielsweise doppelt so häufig, als die der nächsten Priorität versendet werden, diese wiederum häufiger, beispielsweise doppelt so häufig, als die der nächsten Priorität usw.

Für N = 2 würden somit im ersten Hello-Paket die Dateneinträge 811 und 812 versendet, im nächsten zyklischen Hello-Paket dann die Dateneinträge 821 und 822. Anschließend würden die Dateneinträge 813 und 814 versendet, usw. Die komplette Abfolge für die drei Prioritätslisten wäre beispielsweise (nachfolgend werden nur die Listen genannt, aus denen Datensätze chronologisch versendet werden, also bei N=2 immer zwei Dateneinträge pro Liste bzw. Hello-Paket): 81, 82, 81, 81, 82, 81, 83, danach startet die Sequenz von vorne. Alternativ wäre eine Datenabfolge 81, 81, 82, 81, 81, 82, 83 möglich (auch hierbei würden Dateneinträge der ersten Liste 81 doppelt so häufig versandt wie Einträge der zweiten Liste 82 und Einträge der zweiten Liste 82 wiederum doppelt so häufig wie Einträge der dritten Liste 83).

Wenn eine Liste 81, 82, 83 vollständig durchlaufen wurde, wird sie gemäß obigen Verfahren neu aufgebaut. Sollten weniger als N Einträge übrig sein, wird das Hello-Paket vorzugsweise mit Einträgen der nächsten Priorität aufgefüllt.

Mit jedem Hello-Paket, das ein Netzwerkteilnehmer empfängt, gleicht dieser seinen lokalen Datenspeicher 50, d.h. seine lokalen Datensilos, mit dem empfangenen Datenstand ab. Wird dabei festgestellt, dass der Sender des Hello-Pakets neuere Daten als die lokal Vorrätigen besitzt, wird eine Datenanfrage (= Anfragesignal) versendet. In dieser können eine oder mehrere der folgenden Informationen hinterlegt sein:
- Netzwerk ID der Datenquelle,
- Datenquelle auf dem Quellknoten,
- Sequenznummer des letzten lokal verfügbaren Datums,
- zusätzlich können Datensegmente als Wertepaare angehängt werden, um auch ältere Daten anzufordern. Ähnlich wie bereits oben beschrieben, können bis zu M Wertepaare aus End- und Startsequenznummern eingetragen werden, von Daten, die bereits auf dem Knoten vorhanden sind. Dabei wird die Zahl M vorzugsweise so festgelegt, dass die MSS eines Datenanfragepakets maximal ausgenutzt wird. Der erste Block startet insbesondere bei dem neuesten Datum, bis zu einer Unterbrechung in der Sequenznummernreihenfolge, anschließend der zweite bei der nächsten vorliegenden Sequenznummer usw.

Empfängt ein stationärer oder mobiler Knoten 11, 21, 31, 41 (welcher nicht unbedingt der Sender des Hello-Pakets sein muss) solch eine Datenanfrage, gleicht er diese mit seinem Datenstand für das angefragte Datensilo ab. Kann der empfangende Knoten aktuellere Daten bereitstellen als der anfragende Knoten besitzt, oder eventuelle Datenlücken schließen, so beginnt er mit dem Senden von Antwortpaketen. Dabei werden vorzugsweise zuerst die neusten Daten übertragen und erst zuletzt die Datenlücken gefüllt.

In jedem Antwortpaket werden können eine oder mehrere der folgenden Informationen übermittelt werden:
- Netzwerk ID der Datenquelle,
- Datenquelle auf dem Quellknoten,
- Priorität,
- K Wertetupel der Daten, umfassend eine Sequenznummer und/oder einen Zeitstempel und/oder ein zu übertragendes Datum.

Dabei werden jedem Antwortpaket vorzugsweise so viele K-Tupel mitgegeben, dass die MSS des Pakets optimal ausgenutzt wird.

Die Bearbeitung von Antwortpaketen erfolgt insbesondere in einer definierten Zeitspanne (z.B. 50 ms) nach dem Versand eines Hello-Pakets. Erfolgt in diesem Zeitraum keine Anfrage, so werden danach eintreffende Anfrage-Pakete vorzugsweise zwischengespeichert. Deren Bearbeitung erfolgt dann bevorzugt erst in einem definierten Zeitraum (z.B. 100 ms) vor dem Versand des nächsten Hello-Pakets. Werden währenddessen Antwortpakete empfangen, werden die darin enthaltenen Daten als Reaktion auf eine Anfrage vorzugsweise nicht erneut versendet.

Jeder Empfänger (mobiler oder stationärer Knoten 11, 21, 31, 41), der ein Antwortpaket empfängt, wertet dieses aus und trägt die empfangenen Informationen in seine lokalen Datensilos ein. Steht nicht genügend Speicherplatz zur Verfügung, muss eine Bereinigung gemäß dem oben beschriebenen Algorithmus durchgeführt werden.

Die Datenübertragung der zuvor genannten Pakete erfolgt bevorzugt über standardisierte Netzwerkprotokolle, bzw. Open-Source-Lösungen, um eine möglichst gute Integration in bestehende Kommunikationslösungen zu erreichen. Bei der Übertragung werden in einer bevorzugten Ausführungsform konsequent verbindungslose Broadcast-Protokolle genutzt. Insbesondere auf Großbaustellen ändern sich die Empfangsbedingungen zwischen den Geräten sehr schnell aufgrund der Mobilität der Netzwerkteilnehmer, Mehrwegeausbreitung durch Reflexion der Funksignale an Metallstrukturen und hoher Dämpfung durch Baumaterialien und -maschinen. Durch die Verwendung von Broadcastübertragungen wird die inhärente Broadcastnatur von Funksignalen ausgenutzt und eine Übertragung kann von allen Teilnehmern in Empfangsreichweite empfangen werden. Somit sinkt die Anzahl der Duplikate der von Knoten zu Knoten zu übertragenden Datenpunkte und die Geschwindigkeit, mit der Informationen im Netzwerk verteilt werden, steigt.

Für den Datenaustausch zwischen den stationären und mobilen Knoten 11, 21, 31, 41 wird keine externe Infrastruktur benötigt. Vielmehr findet die Kommunikation über die Drahtloskommunikationseinrichtung der Teilnehmer statt. Zu diesem Zweck können die Geräte mit zwei unabhängigen Drahtlosschnittstellen ausgestattet sein. Aufgrund der potenziell hohen Datenmengen kann für die Datenübertragung WLAN gemäß dem Standard IEEE 802.11 verwendet werden, wobei jedoch auch andere Technologien wie z.B. Lora, Bluetooth oder IEEE 802.15.4 als Bitübertragungs- und Sicherungsschicht eingesetzt werden können.

Bei einer Lösung mit zwei Drahtlosschnittstellen kann eine von beiden Drahtlosschnittstellen dauerhaft als Basisstation 91 und die andere als WLAN-Client 92 betreibbar sein. Falls nur eine Schnittstelle in Bestandssystemen verbaut ist, so wird vorzugsweise die "Virtual Access Point"-(VAP; "virtueller Zugangspunkt")-Technologie verwendet, um beide Funktionen gleichzeitig bereitzustellen. Die Sende- und Empfangsfrequenz ist dabei für beide virtuelle Schnittstellen vorzugsweise identisch. Wird die VAP-Technologie von Hard- oder Software nicht unterstützt oder werden Systeme von Drittanbietern integriert, so wird die entsprechende Drahtlosschnittstelle vorzugsweise als Client betrieben.

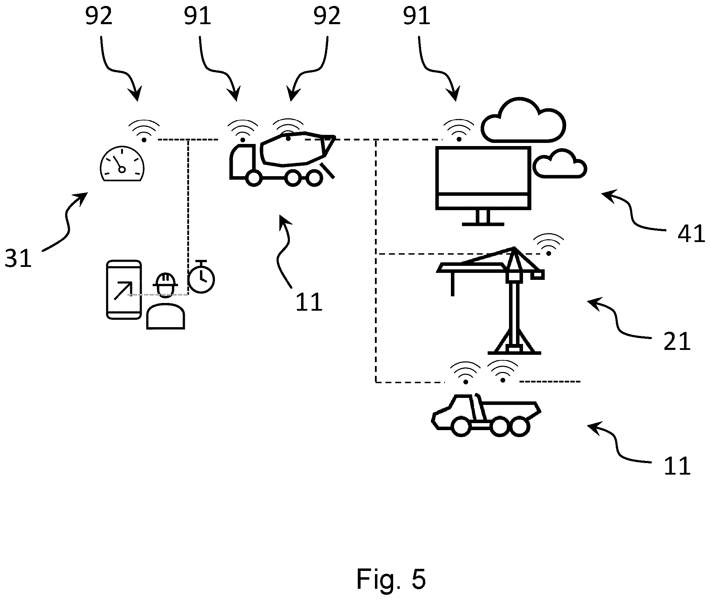

Der grundlegende Netzwerkaufbau dieser zuletzt beschriebenen Lösung ist in der Figur 5 schematisch illustriert. Die Clients 92 verbinden sich dabei mit Basisstationen 91 in Empfangsreichweite. Stehen mehrere Basisstationen 91 zur Verfügung, wird die Verbindung vorzugsweise zyklisch zwischen den Basisstationen 91 gewechselt. Netzwerkknoten 11, 21, 31, 41 mit zwei (ggf. auch virtuellen) Schnittstellen stellen mit ihrem Client 92 nur eine Verbindung zu einer Basisstation 91 her, falls dessen Client 92 nicht bereits mit der Basisstation des Knotens 11, 21, 31, 41 verbunden ist. Basisstationen 91 statischer Knoten 21, 31, 41 werden bei der Auswahl durch die Clients 92 bevorzugt.

Bei der Konfiguration der Schnittstellen kann ein vorab definierter Funkkanal verwendet werden. Somit senden alle Geräte auf der gleichen Frequenz. Steigt die Buslast und damit die Anzahl der Übertragungskollisionen, kommt vorzugsweise eine Kanalarbitrierungsmechanismus zum Einsatz, der die Frequenzumschaltung der Basisstationen 91 und Clients 92 vornimmt.

Um die Broadcastvorteile optimal auszunutzen, erfolgt bei dieser Lösung der Versand der zuvor beschriebenen Sendepakete und der Empfang der Pakete immer auf beiden Interfaces 91, 92, falls diese unterschiedliche Funkkanäle bedienen. Ansonsten wird die Client-Schnittstelle 92 verwendet. Bei der Schnittstellenkonfiguration werden beide Schnittstellen 91, 92 vorzugsweise so eingestellt, dass alle Funkdaten, die die Schnittstelle 91, 92 empfangen hat, verarbeitet werden. Somit können auch Nachrichten verarbeitet werden, die auf dem gleichen Funkkanal gesendet wurden, aber außerhalb des assoziierten WLAN-Netzwerks gesendet wurden.

Um eine möglichst große Kompatibilität mit existierenden Lösungen und Systemen zu erlangen, wird in einer bevorzugten Ausführungsform das Internetprotokoll (IP), bzw. IPv6 und das verbindungslose Datagramm-Protokoll (UDP) verwendet. Beide Protokolle werden standardkonform verwendet und Nachrichten an eine konfigurierbare Broadcast- bzw. bei IPv6 Multicast-Adresse geschickt. Als Quelladressen werden vorzugsweise Link-lokale Adressen verwendet. Der Zielport des UDP-Protokolls kann konfigurierbar sein.

Zur Kapselung der zuvor beschriebenen Hello-, Anfrage- und Antwortpakete, wird bevorzugt das MQTT/UDP-Protokoll verwendet. Diese verbindungslose Abwandlung des weitverbreiteten MQTT-Protokolls, das als verbindungsorientiertes Protokoll auf TCP setzt, benötigt keinen zentralen Server, sondern ist dazu ausgelegt, Daten direkt in ein lokales Netzwerk zu verteilen. Das MQTT/UDP-Protokoll verwendet die gleiche Datenstrukturierung wie MQTT, welches eine direkte Quellenangabe zu einem Datum vorsieht. Es besitzt darüber hinaus die Möglichkeit, zusätzliche Informationen an ein zu übertragendes Datum anzuhängen (TTR; "tagged tail records"). Diese Fähigkeit wird bei der bevorzugten Ausführungsform genutzt, um bei Antwortpaketen Sequenznummer, Zeitstempel und Priorität zusammen mit einem Datum zu übertragen. Diese Eigenschaften machen es ideal für die zu übertragenen Nutzdaten. Auf diese Weise kann jedoch nur ein Datum pro Paket übertragen werden. Der Wert K (d.h. die Anzahl an Daten pro Antwortpaket) reduziert sich somit auf 1.

Zur Kapselung der Hello- und Anfragepakete wird vorzugsweise ebenfalls MQTT/UDP verwendet. Dabei werden die Listeninformationen im Payload übertragen. Die weiteren Informationen wie Datenquelle, aktuelle Uhrzeit, etc. werden geeigneterweise im Topic, bzw. den TTRs des Pakets untergebracht.

Im Folgenden sollen einige Anwendungsbeispiele des erfindungsgemäßen Kommunikationssystems bzw. -verfahrens für den Transport, die Verarbeitung bzw. die Herstellung von Beton angeführt werden.

Die mittels des erfindungsgemäßen Kommunikationssystems erzeugten und übertragenen Daten können beispielsweise einerseits eine Drehzahl einer Mischertrommel eines Fahrmischers und andererseits eine aktuelle Pumpleistung einer Betonpumpe (z.B. einer Autobetonpumpe) betreffen, die durch den Fahrmischer mit Beton versorgt wird und den Beton an einen Einsatzort (z.B. zur Betonierung eines Bauteils eines zu errichtenden Gebäudes) pumpt. In diesem Fall umfassen sowohl der Fahrmischer als auch die Betonpumpe jeweils eine Erfassungseinheit zur Erfassung der Trommeldrehzahl und der Pumpleistung. Durch Erfassung und Auswertung dieser Arbeitsprozessparameter (und ggf. eine entsprechende Anpassung des Mischer- und/oder Pumpbetriebs) kann der Energieverbrauch und/oder der Pumpprozess und somit insgesamt die Betonübergabe vom Fahrmischer an die Betonpumpe optimiert werden. Da in diesem Fall der Fahrmischer und die Betonpumpe in unmittelbarer Nähe zueinander stehen, könnte auch eine direkte Datenübertragung stattfinden.

Ein anderer Anwendungsfall ist eine Optimierung des Betonmanagements durch eine Abstimmung von Betonqualität und Betonmenge. So kann beispielsweise an einem zu errichtenden Bauwerk in einem ersten Schritt (bzw. an einem ersten Ort) eine bestimmte Menge M1 eines Betons mit Rezeptur A und in einem zweiten Schritt (bzw. einem zweiten Ort) eine bestimmte Menge M2 eines Betons mit Rezeptur B benötigt werden. Die Daten können an den Fahrmischer und die durch diesen versorgte Betonpumpe vor Ort übermittelt werden, damit diese den benötigten Beton in der benötigten Menge liefern können. Dadurch ist eine Verringerung des Rohstoffeinsatzes bei optimierter Betonqualität möglich.

Ein weiterer Einsatzfall ist die Erfassung der Einbringposition (z.B. einer Endschlauchposition) einer Betonpumpe am Einsatzort über eine entsprechende Erfassungseinheit und die Bereitstellung dieser Daten über das erfindungsgemäße Kommunikationssystem. Auf Grundlage der erfassten Daten kann eine entsprechende Steuerung des Betonageablaufs erfolgen.

Eine Protokollierung bzw. ein Nachweis einer eingesetzten Betonqualität an der Einbringstelle ist ein weiterer Anwendungsfall. So kann es erforderlich sein, die Qualität bzw. bestimmte Eigenschaften des am zu errichtenden Bauwerk verwendeten Betons zu protokollieren und nachzuweisen. Über entsprechende Erfassungseinheiten an der Betonpumpe und/oder am Fahrmischer und/oder am Betonmischwerk können entsprechende Daten mittels des erfindungsgemäßen Kommunikationssystems erzeugt, verteilt und archiviert werden, sodass diese Daten entsprechenden Behörden zugespielt werden können.

Ebenfalls denkbar ist eine Optimierung des Flottenmanagements, beispielsweise über eine Abstimmung der Fahrmischergröße und der benötigten Betonmenge. Durch einen optimierten Einsatz der Fahrmischerflotte (d.h. es werden keine unnötig großen Fahrmischer mit Leerkapazität oder zu kleine Fahrmischer mit für den vorgesehenen Einsatz ungenügender Kapazität verwendet) kann der Energieverbrauch sowie die benötigte Arbeitszeit optimiert werden. Durch die Möglichkeit, entsprechende Daten zu erzeugen und im Netzwerk zu verteilen, kann auch auf sich ändernde Anforderungen reagiert werden. Die Daten lassen sich protokollieren und dadurch ggf. auch für zukünftige Einsätze verwenden, beispielsweise zur Verbesserung der Abläufe.

### Bezugszeichenliste:

- 1: Erster Standort (Betonmischanlage)
- 2: Zweiter Standort (Baustelle)
- 3: Dritter Standort (Datenverwaltungsstation)
- 4: Management-Standort
- 10: Mobiles Kommunikationsmodul
- 11: Mobiler Knoten
- 12: Bewegliches Nutzfahrzeug
- 20: Stationäres Kommunikationsmodul
- 21: Stationärer Knoten
- 22: Stationäre Arbeitsmaschine
- 30: Erfassungseinrichtung
- 31: Sensorknoten
- 40: Datenverwaltungsstation
- 41: Verwaltungsknoten
- 50: Lokaler Datenspeicher
- 51: Speicherabschnitt / Datensilo
- 52: Speicherabschnitt / Datensilo
- 53: Speicherabschnitt / Datensilo
- 55: Datensatz
- 57: Speicherlimit
- 60: Sende- und/oder Empfangsbereich
- 70: Zentraler Datenspeicher
- 71: Speicherabschnitt / Datensilo
- 81: Erste Liste (höchste Prioritätsstufe)
- 82: Zweite Liste (mittlere Prioritätsstufe)
- 83: Dritte Liste (niedrigste Prioritätsstufe)
- 91: Basisstation
- 92: WLAN-Client
- 511: Datensatz
- 512: Datensatz
- 513: Datensatz
- 514: Datensatz
- 711: Datensatz

- 811-814: Dateneinträge der ersten Liste 81
- 821-826: Dateneinträge der zweiten Liste 82
- 831-837: Dateneinträge der dritten Liste 83

## Patentansprüche

1. Kommunikationssystem für Arbeitsstätten, insbesondere Großbaustellen und Minen, ohne feste Kommunikationsinfrastruktur, umfassend:
- eine Vielzahl von mobilen Kommunikationsmodulen (10), die jeweils einem mobilen Gerät oder einem beweglichen Nutzfahrzeug (12) zugeordnet sind;
- eine Vielzahl von stationären Kommunikationsmodulen (20), die jeweils einem festen Ort auf der Arbeitsstätte, insbesondere einer stationären Arbeitsmaschine (22), zugeordnet sind;
- mindestens eine Erfassungseinheit (30), mittels welcher ein Arbeitsparameter messbar ist, der einen durch eine stationäre Arbeitsmaschine (22), ein mobiles Gerät und/oder ein Nutzfahrzeug (12) ausgeführten Arbeitsprozess betrifft, wobei die Erfassungseinheit (30) mit einem stationären oder mobilen Kommunikationsmodul (10, 20) in Signalverbindung steht;
- eine Datenverwaltungsstation (40) mit einem stationären Kommunikationsmodul (20), welche mit einem zentralen Datenspeicher (70) in Signalverbindung steht und eingerichtet ist, von einem mobilen Kommunikationsmodul (10) empfangene Daten im zentralen Datenspeicher (70) abzulegen;
wobei die Kommunikationsmodule (10, 20) folgendes umfassen:
- eine Sendeeinheit, welche eingerichtet ist, innerhalb eines Sendebereichs Daten drahtlos zu senden;
- eine Empfangseinheit, welche eingerichtet ist, innerhalb eines Empfangsbereichs Daten drahtlos zu empfangen; und
- einen lokalen Datenspeicher (50), in welchem empfangene Daten gemäß einer festgelegten Systematik ablegbar sind;
wobei die Kommunikationsmodule (10, 20) eingerichtet sind:
- zwischen stationären Kommunikationsmodulen (20) mit einander nicht überlappenden Sende- und/oder Empfangsbereichen (60) indirekt Daten über eine Zwischenspeicherung durch sich zwischen den Sende- und/oder Empfangsbereichen (60) bewegende mobile Kommunikationsmodule (10) auszutauschen; und
- auf dem eigenen lokalen Datenspeicher (50) hinterlegte Daten mit empfangenen Daten abzugleichen und zu synchronisieren.
**dadurch gekennzeichnet, dass**
die mobilen Kommunikationsmodule (10) eingerichtet sind,
- bei Eintritt in den Empfangsbereich (60) eines anderen Kommunikationsmoduls (10, 20) und/oder bei Registrierung, dass sich ein anderes Kommunikationsmodul (10, 20) im eigenen Sendebereich (60) befindet, und/oder bei Empfang eines per Broadcast gesendeten Abgleichsignals, welches den aktuellen Datenbestand des lokalen Datenspeichers (50) des sendenden Kommunikationsmoduls (10, 20) betrifft, ein Anfragesignal zu senden, welches wenigstens eine Information betreffend ein aktuellstes gespeichertes Datenpaket und/oder eine Lücke im Datenbestand umfasst,
- sowie bei Empfang des Anfragesignals im lokalen Datenspeicher (50) des anfragenden Kommunikationsmoduls (10, 20) bislang fehlende Daten an das anfragende Kommunikationsmodul (10, 20) zu senden.

2. Kommunikationssystem nach Anspruch 1, wobei mindestens ein stationäres Kommunikationsmodul (20) eingerichtet ist, Daten aus dem lokalen Datenspeicher (50) per Broadcast-Übertragung unabhängig von einer Anwesenheit oder einem Anfragesignal eines mobilen Kommunikationsmoduls (10) zu senden, insbesondere in festgelegten Zeitabständen.

3. Kommunikationssystem nach Anspruch 1 oder 2, wobei mindestens ein mobiles Kommunikationsmodul (10) eingerichtet ist, Daten aus dem lokalen Datenspeicher (50) per Broadcast-Übertragung unabhängig von einer Anwesenheit oder einem Anfragesignal eines stationären oder mobilen Kommunikationsmoduls (10, 20) zu senden, insbesondere in festgelegten Zeitabständen.

4. Kommunikationssystem nach einem der vorhergehenden Ansprüche, welches dazu eingerichtet ist, dass eine Synchronisierung der lokalen Datenspeicher (50) der mobilen und stationären Kommunikationsmodule (10, 20) und des zentralen Datenspeichers (70) durch nicht primär der Datenverbreitung dienende Bewegungen der mobilen Kommunikationsmodule (10) zwischen den Sende- und/oder Empfangsbereichen (60) der stationären Kommunikationsmodule (20) unter Zwischenspeicherung übertragener Daten auf lokalen Datenspeichern (50) der Kommunikationsmodule (10, 20) erfolgt.

5. Kommunikationssystem nach einem der vorhergehenden Ansprüche, wobei die zwischen den Kommunikationsmodulen (10, 20) ausgetauschten Daten in Datenpaketen zusammengefasst sind, welche Daten betreffend eine oder mehrere der folgenden Informationen umfassen:
- einen Wert oder Verlauf eines von einer Erfassungseinheit (30) erfassten Arbeitsparameters,
- eine Identität einer Erfassungseinheit (30),
- eine Identität des sendenden Kommunikationsmoduls (10, 20) und/oder des zugeordneten Geräts / Nutzfahrzeugs (12, 22),
- eine das sendende Kommunikationsmodul (10, 20) und/oder das zugeordnete Gerät / Nutzfahrzeug (12, 22) betreffende Eigenschaft,
- eine Fahrzeit und/oder Position und/oder Route eines Nutzfahrzeugs (12),
- einen Zeitstempel eines Datenpakets,
- einen aktuellen Zeitstempel,
- eine Reihenfolge von auf einem lokalen Datenspeicher (50) hinterlegten Datenpaketen,
- eine Priorität eines Datenpakets,
- eine Konfidenz eines Zeitstempels, vorzugsweise basierend auf einer Distanz zu einer Erfassungseinheit (30) und/oder einer Anzahl von Datenübertragungen des zugeordneten Datenpakets.

6. Kommunikationssystem nach einem der vorhergehenden Ansprüche, wobei die zwischen den Kommunikationsmodulen (10, 20) ausgetauschten Daten in Datenpaketen zusammengefasst sind, wobei die Kommunikationsmodule (10, 20) eingerichtet sind, eine definierte Anzahl von Datenpaketen gemeinsam zu senden, wobei die definierte Anzahl vorzugsweise abhängt von einer maximalen Segmentgröße eines der drahtlosen Übertragung zugrundeliegenden Übertragungsprotokolls.

7. Kommunikationssystem nach dem vorhergehenden Anspruch, wobei die Kommunikationsmodule (10, 20) eingerichtet sind, die empfangenen Datenpakete anhand eines oder mehrerer festgelegter Kriterien in unterschiedlichen Prioritäten im lokalen Datenspeicher (50) abzulegen, wobei die Kommunikationsmodule (10, 20) ferner eingerichtet sind, beim Senden die Prioritäten der Datenpakete zu berücksichtigen, vorzugsweise dergestalt, dass innerhalb der definierten Anzahl von gemeinsam gesendeten Datenpaketen mehr Datenpakete einer höheren Priorität als Datenpakete einer niedrigeren Priorität gesendet werden.

8. Kommunikationssystem nach einem der vorhergehenden Ansprüche, umfassend mindestens zwei Erfassungseinheiten (30), wobei jeder lokale Datenspeicher (50) in mehrere, jeweils einer Erfassungseinheit (30) zugeordnete Speicherabschnitte (51, 52, 53) unterteilt ist, wobei die Kommunikationsmodule (10, 20) eingerichtet sind, empfangene Daten einer Erfassungseinheit (30) zuzuordnen und im zugehörigen Speicherabschnitt (51, 52, 53) des lokalen Datenspeichers (50) abzuspeichern.

9. Kommunikationssystem nach einem der vorhergehenden Ansprüche, wobei die Kommunikationsmodule (10, 20) eingerichtet sind, die empfangenen Daten im lokalen Datenspeicher (50) in einer festgelegten Reihenfolge in Abhängigkeit von mit den Daten übertragenen Zeitstempeln abzuspeichern, wobei die Kommunikationsmodule (10, 20) vorzugsweise ferner eingerichtet sind, bei Überschreiten einer festgelegten Speicherauslastung Dateneinträge in Abhängigkeit der zugeordneten Zeitstempel zu löschen, insbesondere Dateneinträge mit den ältesten Zeitstempeln bevorzugt zu löschen.

10. Kommunikationssystem nach einem der vorhergehenden Ansprüche, wobei die Kommunikationsmodule (10, 20) eingerichtet sind, nur empfangene Daten, die nicht bereits auf dem lokalen Datenspeicher (50) hinterlegt sind, auf dem lokalen Datenspeicher (50) abzulegen, wobei vorzugsweise nur Daten gespeichert werden, die ein festgelegtes Kriterium erfüllen, insbesondere einen jüngeren Zeitstempel als einen Referenzzeitstempel und/oder eine anhand eines oder mehrerer festgelegter Kriterien zugeordnete Priorität aufweisen.

11. Kommunikationssystem nach einem der vorhergehenden Ansprüche, umfassend mindestens eine stationäre Arbeitsmaschine (22) mit einem stationären Kommunikationsmodul (20) und mindestens ein Nutzfahrzeug (12) mit einem mobilen Kommunikationsmodul (10), vorzugsweise ferner umfassend mindestens ein mobiles Gerät mit einem mobilen Kommunikationsmodul (10), welches von einer Bedienperson tragbar ist.

12. Kommunikationssystem nach dem vorhergehenden Anspruch, wobei mindestens eine stationäre Arbeitsmaschine (22) als Arbeitsmaschine zur Lagerung und/oder Herstellung und/oder Verarbeitung von Beton und mindestens ein Nutzfahrzeug (12) als fahrbarer Betonmischer oder fahrbare Betonpumpe ausgeführt ist, wobei die Arbeitsstätte vorzugsweise eine Großbaustelle ist.

13. Kommunikationssystem nach den Ansprüchen 5 und 12, wobei die Datenpakete Daten betreffend eine oder mehrere der folgenden Informationen umfassen:
- eine Betonqualität,
- eine Betonzusammensetzung,
- eine Wasserzugabe zum Beton,
- eine Eigenschaft des Betons wie beispielsweise Viskosität oder Wassergehalt,
- eine Fahrzeit und/oder Position und/oder Route eines fahrbaren Betonmischers oder einer fahrbaren Betonpumpe,
- einen Einbringort von Beton.

14. Verfahren zum Austausch von Daten mittels eines Kommunikationssystems nach einem der vorhergehenden Ansprüche, wobei Daten indirekt von einem ersten stationären Kommunikationsmodul (20) an ein zweites stationäres Kommunikationsmodul (20) übertragen werden, deren Sende- und Empfangsbereiche (60) sich nicht überlappen, wobei sich ein erstes mobiles Kommunikationsmodul (10) in den Sendebereich (60) des ersten stationären Kommunikationsmoduls (20) bewegt, auf dem lokalen Datenspeicher (50) des ersten stationären Kommunikationsmoduls (20) hinterlegte Daten drahtlos empfängt und auf dem eigenen lokalen Datenspeicher (50) ablegt, sich aus dem Sendebereich (60) des ersten stationären Kommunikationsmoduls (20) hinaus- und in den Empfangsbereich (60) des zweiten stationären Kommunikationsmoduls (20) hineinbewegt und auf dem lokalen Datenspeicher (50) zwischengespeicherten Daten drahtlos an das zweite stationäre Kommunikationsmodul (20) sendet, wobei das zweite stationäre Kommunikationsmodul (20) die empfangenen Daten auf dessen lokalem Datenspeicher (50) ablegt.

15. Verfahren nach dem vorhergehenden Anspruch, wobei sich ein zweites mobiles Kommunikationsmodul (10) in den Sendebereich des zweiten stationären Kommunikationsmoduls (20) bewegt, auf dem lokalen Datenspeicher (50) des zweiten stationären Kommunikationsmoduls (20) hinterlegte Daten des ersten stationären Kommunikationsmoduls (10) drahtlos empfängt und auf dem eigenen lokalen Datenspeicher (50) ablegt, sich aus dem Sendebereich (60) des zweiten stationären Kommunikationsmoduls (20) hinaus- und in den Empfangsbereich (60) des stationären Kommunikationsmoduls (20) der Datenverwaltungsstation (40) hineinbewegt und auf dem lokalen Datenspeicher (50) zwischengespeicherte Daten drahtlos an das stationäre Kommunikationsmodul (20) der Datenverwaltungsstation (40) sendet, wobei die empfangenen Daten auf dem zentralen Datenspeicher (70) ablegt werden.

16. Verfahren nach einem der beiden vorhergehenden Ansprüche, wobei die mobilen Kommunikationsmodule (10) mobilen Geräten und/oder beweglichen Nutzfahrzeugen (12) zugeordnet sind, welche sich nicht primär zum Zwecke der indirekten Datenübertragung zwischen den Sende- und Empfangsbereichen (60) der stationären Kommunikationsmodule (20) bewegen, sondern insbesondere zur Durchführung von Arbeitsfunktionen.

17. Computerprogrammprodukt umfassend Befehle, die bei der Ausführung des Programms bewirken, dass Kommunikationsmodule (10, 20) des Kommunikationssystems nach einem der Ansprüche 1 bis 13 die auf die Kommunikationsmodule (10, 20) bezogenen Schritte des Verfahrens nach einem der Ansprüche 14 bis 16 ausführen.

## Claims

1. Communication system for work sites, in particular large construction sites and mines, without fixed communication infrastructure, comprising:
- a plurality of mobile communication modules (10), each assigned to a mobile device or a movable utility vehicle (12);
- a plurality of stationary communication modules (20), each assigned to a fixed location on the work site, in particular a stationary work machine (22);
- at least one detection unit (30), by means of which a work parameter is measurable that relates to a work process carried out by a stationary work machine (22), a mobile device and/or a utility vehicle (12), wherein the detection unit (30) is in signal communication with a stationary or mobile communication module (10, 20);
- a data management station (40) having a stationary communication module (20), which is in signal communication with a central data memory (70) and is configured to store data received from a mobile communication module (10) in the central data memory (70);
wherein the communication modules (10, 20) comprise the following:
- a transmitting unit configured to wirelessly transmit data within a transmission range;
- a receiving unit configured to wirelessly receive data within a reception range; and
- a local data memory (50), in which received data can be stored according to a defined system;
wherein the communication modules (10, 20) are configured:
- to exchange data indirectly between stationary communication modules (20) having mutually non-overlapping transmission and/or reception ranges (60) via temporary storage by mobile communication modules (10) moving between the transmission and/or reception ranges (60); and
- to compare and synchronize data stored in their own local data memory (50) with received data
**characterized in that**
the mobile communication modules (10) are configured
- upon entering the reception range (60) of another communication module (10, 20) and/or upon registering that another communication module (10, 20) is located in their own transmission range (60), and/or upon receiving a synchronization signal sent by broadcast, which concerns the current data inventory of the local data memory (50) of the transmitting communication module (10, 20), to send a request signal which comprises at least information concerning a most recently stored data packet and/or a gap in the data inventory,
- and, upon receiving the request signal, to send to the requesting communication module (10, 20) data that are still missing in the local data memory (50) of the requesting communication module (10, 20).

2. Communication system according to claim 1, wherein at least one stationary communication module (20) is configured to transmit data from the local data memory (50) by broadcast transmission independently of the presence or a request signal of a mobile communication module (10), in particular at defined time intervals.

3. Communication system according to claim 1 or 2, wherein at least one mobile communication module (10) is configured to transmit data from the local data memory (50) by broadcast transmission independently of the presence or a request signal of a stationary or mobile communication module (10, 20), in particular at defined time intervals.

4. Communication system according to one of the preceding claims, which is configured such that synchronization of the local data memories (50) of the mobile and stationary communication modules (10, 20) and of the central data memory (70) takes place by movements of the mobile communication modules (10) between the transmission and/or reception ranges (60) of the stationary communication modules (20) that do not primarily serve data dissemination, with temporary storage of transmitted data on local data memories (50) of the communication modules (10, 20).

5. Communication system according to one of the preceding claims, wherein the data exchanged between the communication modules (10, 20) are combined into data packets which comprise data relating to one or more of the following pieces of information:
- a value or progression of a work parameter detected by a detection unit (30),
- an identity of a detection unit (30),
- an identity of the transmitting communication module (10, 20) and/or of the assigned device/utility vehicle (12, 22),
- a property relating to the transmitting communication module (10, 20) and/or the assigned device/utility vehicle (12, 22),
- a travel time and/or position and/or route of a utility vehicle (12),
- a time stamp of a data packet,
- a current time stamp,
- an order of data packets stored on a local data memory (50),
- a priority of a data packet,
- a confidence of a time stamp, preferably based on a distance to a detection unit (30) and/or a number of data transmissions of the assigned data packet.

6. Communication system according to one of the preceding claims, wherein the data exchanged between the communication modules (10, 20) are combined into data packets, wherein the communication modules (10, 20) are configured to send a defined number of data packets jointly, wherein the defined number preferably depends on a maximum segment size of a transmission protocol underlying the wireless transmission.

7. Communication system according to the preceding claim, wherein the communication modules (10, 20) are configured to store the received data packets in the local data memory (50) with different priorities based on one or more defined criteria, wherein the communication modules (10, 20) are further configured, during transmission, to take the priorities of the data packets into account, preferably in such a way that, within the defined number of jointly transmitted data packets, more data packets of a higher priority than data packets of a lower priority are transmitted.

8. Communication system according to one of the preceding claims, comprising at least two detection units (30), wherein each local data memory (50) is divided into a plurality of memory sections (51, 52, 53), each assigned to one detection unit (30), wherein the communication modules (10, 20) are configured to assign received data to a detection unit (30) and to store them in the associated memory section (51, 52, 53) of the local data memory (50).

9. Communication system according to one of the preceding claims, wherein the communication modules (10, 20) are configured to store the received data in the local data memory (50) in a defined order depending on time stamps transmitted with the data, wherein the communication modules (10, 20) are preferably further configured, upon exceeding a defined memory utilization, to delete data entries depending on the assigned time stamps, in particular preferentially to delete data entries with the oldest time stamps.

10. Communication system according to one of the preceding claims, wherein the communication modules (10, 20) are configured to store on the local data memory (50) only received data that are not already stored on the local data memory (50), wherein preferably only data are stored that satisfy a defined criterion, in particular have a more recent time stamp than a reference time stamp and/or have a priority assigned on the basis of one or more defined criteria.

11. Communication system according to one of the preceding claims, comprising at least one stationary work machine (22) having a stationary communication module (20) and at least one utility vehicle (12) having a mobile communication module (10), preferably further comprising at least one mobile device having a mobile communication module (10), which can be carried by an operator.

12. Communication system according to the preceding claim, wherein at least one stationary work machine (22) is designed as a work machine for storage and/or production and/or processing of concrete and at least one utility vehicle (12) is designed as a mobile concrete mixer or mobile concrete pump, wherein the work site is preferably a large construction site.

13. Communication system according to claims 5 and 12, wherein the data packets comprise data relating to one or more of the following pieces of information:
- a concrete quality,
- a concrete composition,
- addition of water to the concrete,
- a property of the concrete such as viscosity or water content,
- a travel time and/or position and/or route of a mobile concrete mixer or a mobile concrete pump,
- a placement location of concrete.

14. Method for exchanging data by means of a communication system according to one of the preceding claims, wherein data are transmitted indirectly from a first stationary communication module (20) to a second stationary communication module (20), the transmission and reception ranges (60) of which do not overlap, wherein a first mobile communication module (10) moves into the transmission range (60) of the first stationary communication module (20), wirelessly receives data stored on the local data memory (50) of the first stationary communication module (20) and stores them on its own local data memory (50), moves out of the transmission range (60) of the first stationary communication module (20) and into the reception range (60) of the second stationary communication module (20), and wirelessly transmits the data temporarily stored on the local data memory (50) to the second stationary communication module (20), wherein the second stationary communication module (20) stores the received data on its local data memory (50).

15. Method according to the preceding claim, wherein a second mobile communication module (10) moves into the transmission range of the second stationary communication module (20), wirelessly receives data of the first stationary communication module (10) stored on the local data memory (50) of the second stationary communication module (20) and stores them on its own local data memory (50), moves out of the transmission range (60) of the second stationary communication module (20) and into the reception range (60) of the stationary communication module (20) of the data management station (40), and wirelessly transmits the data temporarily stored on the local data memory (50) to the stationary communication module (20) of the data management station (40), wherein the received data are stored on the central data memory (70).

16. Method according to one of the two preceding claims, wherein the mobile communication modules (10) are assigned to mobile devices and/or movable utility vehicles (12), which do not move primarily for the purpose of indirect data transmission between the transmission and reception ranges (60) of the stationary communication modules (20), but in particular for carrying out work functions.

17. Computer program product comprising instructions which, when the program is executed, cause communication modules (10, 20) of the communication system according to one of claims 1 to 13 to carry out the steps, relating to the communication modules (10, 20), of the method according to one of claims 14 to 16.

## Revendications

1. Système de communication pour sites de travail, en particulier grands chantiers et mines, sans infrastructure de communication fixe, comprenant :
- une pluralité de modules de communication mobiles (10), chacun étant associé à un appareil mobile ou à un véhicule utilitaire mobile (12) ;
- une pluralité de modules de communication stationnaires (20), chacun étant associé à un lieu fixe sur le site de travail, en particulier à une machine de travail stationnaire (22) ;
- au moins une unité de détection (30), au moyen de laquelle un paramètre de travail est mesurable, lequel concerne un processus de travail exécuté par une machine de travail stationnaire (22), un appareil mobile et/ou un véhicule utilitaire (12), l'unité de détection (30) étant en liaison de signal avec un module de communication stationnaire ou mobile (10, 20) ;
- une station de gestion de données (40) comportant un module de communication stationnaire (20), laquelle est en liaison de signal avec une mémoire de données centrale (70) et est configurée pour déposer dans la mémoire de données centrale (70) des données reçues d'un module de communication mobile (10) ;
les modules de communication (10, 20) comprenant les éléments suivants :
- une unité d'émission, configurée pour émettre sans fil des données à l'intérieur d'une portée d'émission ;
- une unité de réception, configurée pour recevoir sans fil des données à l'intérieur d'une portée de réception ; et
- une mémoire de données locale (50), dans laquelle des données reçues peuvent être déposées selon une systématique définie ;
les modules de communication (10, 20) étant configurés :
- pour échanger indirectement des données entre des modules de communication stationnaires (20) ayant des portées d'émission et/ou de réception (60) ne se chevauchant pas mutuellement, via un stockage intermédiaire par des modules de communication mobiles (10) se déplaçant entre les portées d'émission et/ou de réception (60) ; et
- pour comparer et synchroniser les données déposées sur leur propre mémoire de données locale (50) avec les données reçues.
**caractérisé en ce que**
les modules de communication mobiles (10) sont configurés,
- lors de l'entrée dans la portée de réception (60) d'un autre module de communication (10, 20) et/ou lors de l'enregistrement du fait qu'un autre module de communication (10, 20) se trouve dans leur propre portée d'émission (60), et/ou lors de la réception d'un signal de synchronisation émis par diffusion, lequel concerne l'état actuel des données de la mémoire de données locale (50) du module de communication émetteur (10, 20), pour émettre un signal de requête comprenant au moins une information concernant un paquet de données mémorisé le plus récent et/ou une lacune dans l'état des données,
- ainsi que, lors de la réception du signal de requête, pour envoyer au module de communication requérant (10, 20) des données encore absentes dans la mémoire de données locale (50) du module de communication requérant (10, 20).

2. Système de communication selon la revendication 1, dans lequel au moins un module de communication stationnaire (20) est configuré pour émettre des données provenant de la mémoire de données locale (50) par transmission de diffusion indépendamment d'une présence ou d'un signal de requête d'un module de communication mobile (10), en particulier à intervalles de temps définis.

3. Système de communication selon la revendication 1 ou 2, dans lequel au moins un module de communication mobile (10) est configuré pour émettre des données provenant de la mémoire de données locale (50) par transmission de diffusion indépendamment d'une présence ou d'un signal de requête d'un module de communication stationnaire ou mobile (10, 20), en particulier à intervalles de temps définis.

4. Système de communication selon l'une des revendications précédentes, qui est configuré de telle sorte qu'une synchronisation des mémoires de données locales (50) des modules de communication mobiles et stationnaires (10, 20) et de la mémoire de données centrale (70) s'effectue par des déplacements des modules de communication mobiles (10) entre les portées d'émission et/ou de réception (60) des modules de communication stationnaires (20), déplacements ne servant pas principalement à la diffusion des données, avec stockage intermédiaire des données transmises sur des mémoires de données locales (50) des modules de communication (10, 20).

5. Système de communication selon l'une des revendications précédentes, dans lequel les données échangées entre les modules de communication (10, 20) sont regroupées en paquets de données, lesquels comprennent des données concernant une ou plusieurs des informations suivantes :
- une valeur ou une évolution d'un paramètre de travail détecté par une unité de détection (30),
- une identité d'une unité de détection (30),
- une identité du module de communication émetteur (10, 20) et/ou de l'appareil/véhicule utilitaire associé (12, 22),
- une propriété concernant le module de communication émetteur (10, 20) et/ou l'appareil/véhicule utilitaire associé (12, 22),
- un temps de trajet et/ou une position et/ou un itinéraire d'un véhicule utilitaire (12),
- un horodatage d'un paquet de données,
- un horodatage actuel,
- un ordre de paquets de données déposés sur une mémoire de données locale (50),
- une priorité d'un paquet de données,
- une confiance d'un horodatage, de préférence sur la base d'une distance à une unité de détection (30) et/ou d'un nombre de transmissions de données du paquet de données associé.

6. Système de communication selon l'une des revendications précédentes, dans lequel les données échangées entre les modules de communication (10, 20) sont regroupées en paquets de données, les modules de communication (10, 20) étant configurés pour envoyer conjointement un nombre défini de paquets de données, le nombre défini dépendant de préférence d'une taille maximale de segment d'un protocole de transmission sous-jacent à la transmission sans fil.

7. Système de communication selon la revendication précédente, dans lequel les modules de communication (10, 20) sont configurés pour déposer les paquets de données reçus dans la mémoire de données locale (50) avec des priorités différentes sur la base d'un ou de plusieurs critères définis, les modules de communication (10, 20) étant en outre configurés pour tenir compte, lors de l'envoi, des priorités des paquets de données, de préférence de telle manière que, dans le nombre défini de paquets de données envoyés conjointement, davantage de paquets de données d'une priorité plus élevée que de paquets de données d'une priorité plus faible soient envoyés.

8. Système de communication selon l'une des revendications précédentes, comprenant au moins deux unités de détection (30), chaque mémoire de données locale (50) étant divisée en plusieurs sections de mémoire (51, 52, 53), chacune étant associée à une unité de détection (30), les modules de communication (10, 20) étant configurés pour associer les données reçues à une unité de détection (30) et les enregistrer dans la section de mémoire correspondante (51, 52, 53) de la mémoire de données locale (50).

9. Système de communication selon l'une des revendications précédentes, dans lequel les modules de communication (10, 20) sont configurés pour enregistrer les données reçues dans la mémoire de données locale (50) dans un ordre défini en fonction des horodatages transmis avec les données, les modules de communication (10, 20) étant de préférence en outre configurés pour, en cas de dépassement d'un taux d'occupation de mémoire défini, supprimer des entrées de données en fonction des horodatages associés, en particulier supprimer de préférence des entrées de données ayant les horodatages les plus anciens.

10. Système de communication selon l'une des revendications précédentes, dans lequel les modules de communication (10, 20) sont configurés pour ne déposer sur la mémoire de données locale (50) que des données reçues qui ne sont pas déjà déposées sur la mémoire de données locale (50), de préférence seules étant enregistrées des données qui satisfont à un critère défini, présentent en particulier un horodatage plus récent qu'un horodatage de référence et/ou présentent une priorité attribuée sur la base d'un ou de plusieurs critères définis.

11. Système de communication selon l'une des revendications précédentes, comprenant au moins une machine de travail stationnaire (22) comportant un module de communication stationnaire (20) et au moins un véhicule utilitaire (12) comportant un module de communication mobile (10), comprenant de préférence en outre au moins un appareil mobile comportant un module de communication mobile (10), pouvant être porté par un opérateur.

12. Système de communication selon la revendication précédente, dans lequel au moins une machine de travail stationnaire (22) est réalisée comme machine de travail pour le stockage et/ou la fabrication et/ou le traitement du béton et au moins un véhicule utilitaire (12) est réalisé comme bétonnière mobile ou pompe à béton mobile, le site de travail étant de préférence un grand chantier.

13. Système de communication selon les revendications 5 et 12, dans lequel les paquets de données comprennent des données concernant une ou plusieurs des informations suivantes :
- une qualité de béton,
- une composition du béton,
- un ajout d'eau au béton,
- une propriété du béton telle que, par exemple, la viscosité ou la teneur en eau,
- un temps de trajet et/ou une position et/ou un itinéraire d'une bétonnière mobile ou d'une pompe à béton mobile,
- un lieu de mise en place du béton.

14. Procédé d'échange de données au moyen d'un système de communication selon l'une des revendications précédentes, dans lequel des données sont transmises indirectement d'un premier module de communication stationnaire (20) à un second module de communication stationnaire (20), dont les portées d'émission et de réception (60) ne se chevauchent pas, un premier module de communication mobile (10) se déplaçant dans la portée d'émission (60) du premier module de communication stationnaire (20), recevant sans fil des données déposées sur la mémoire de données locale (50) du premier module de communication stationnaire (20) et les déposant sur sa propre mémoire de données locale (50), se déplaçant hors de la portée d'émission (60) du premier module de communication stationnaire (20) et dans la portée de réception (60) du second module de communication stationnaire (20), et envoyant sans fil au second module de communication stationnaire (20) des données stockées intermédiairement sur la mémoire de données locale (50), le second module de communication stationnaire (20) déposant les données reçues sur sa mémoire de données locale (50).

15. Procédé selon la revendication précédente, dans lequel un second module de communication mobile (10) se déplace dans la portée d'émission du second module de communication stationnaire (20), reçoit sans fil des données du premier module de communication stationnaire (10) déposées sur la mémoire de données locale (50) du second module de communication stationnaire (20) et les dépose sur sa propre mémoire de données locale (50), se déplace hors de la portée d'émission (60) du second module de communication stationnaire (20) et dans la portée de réception (60) du module de communication stationnaire (20) de la station de gestion de données (40), et envoie sans fil au module de communication stationnaire (20) de la station de gestion de données (40) des données stockées intermédiairement sur la mémoire de données locale (50), les données reçues étant déposées sur la mémoire de données centrale (70).

16. Procédé selon l'une des deux revendications précédentes, dans lequel les modules de communication mobiles (10) sont associés à des appareils mobiles et/ou à des véhicules utilitaires mobiles (12), lesquels ne se déplacent pas principalement dans le but de la transmission indirecte de données entre les portées d'émission et de réception (60) des modules de communication stationnaires (20), mais en particulier pour l'exécution de fonctions de travail.

17. Produit programme d'ordinateur comprenant des instructions qui, lors de l'exécution du programme, amènent des modules de communication (10, 20) du système de communication selon l'une des revendications 1 à 13 à exécuter les étapes du procédé selon l'une des revendications 14 à 16 se rapportant aux modules de communication (10, 20).
